(19) Europäisches Patentamt
European Patent Office
Office européen des brevets

(11) EP 3 317 121 B1

(12) **FASCICULE DE BREVET EUROPEEN**

(45) Date de publication et mention de la délivrance du brevet:
**08.05.2019 Bulletin 2019/19**

(21) Numéro de dépôt: **16734378.9**

(22) Date de dépôt: **01.07.2016**

(51) Int Cl.:
***B60C 1/00*** (2006.01) ***C08C 19/22*** (2006.01)
***C08C 19/25*** (2006.01) ***C08C 19/44*** (2006.01)
***C08L 15/00*** (2006.01)

(86) Numéro de dépôt international:
**PCT/EP2016/065592**

(87) Numéro de publication internationale:
**WO 2017/001683 (05.01.2017 Gazette 2017/01)**

(54) **ELASTOMÈRE DIÉNIQUE MODIFIÉ À IP RÉDUIT ET COMPOSITION LE CONTENANT**
MODIFIZIERTES DIENELASTOMER MIT REDUZIERTEM PDI UND ZUSAMMENSETZUNG DAMIT
MODIFIED DIENE ELASTOMER WITH REDUCED PDI AND COMPOSITION CONTAINING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2015 FR 1556253**

(43) Date de publication de la demande:
**09.05.2018 Bulletin 2018/19**

(73) Titulaire: **Compagnie Générale des Etablissements Michelin**
**63000 Clermont-Ferrand (FR)**

(72) Inventeurs:
- **DESSENDIER, Marie-Hélène**
**63040 Clermont-Ferrand Cedex 09 (FR)**
- **DIRE, Charlotte**
**63040 Clermont-Ferrand Cedex 09 (FR)**
- **DORATO, Margarita**
**63040 Clermont-Ferrand Cedex 09 (FR)**
- **MARECHAL, Jean Marc**
**63040 Clermont-Ferrand Cedex 09 (FR)**
- **VAULTIER, Florent**
**63040 Clermont-Ferrand Cedex 09 (FR)**

(74) Mandataire: **Le Cam, Véronique Marie Christine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2015/018599 FR-A1- 3 012 454**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 317 121 B1

## Description

L'invention se rapporte à un élastomère diénique modifié comprenant au moins 70% en poids d'un élastomère diénique linéaire spécifique fonctionnalisé majoritairement en milieu de chaîne par un groupe alcoxysilane, éventuellement partiellement ou totalement hydrolysé, porteur le cas échéant d'une autre fonction susceptible d'interagir avec une charge renforçante au sein d'une composition de caoutchouc, et au plus 30% en poids d'un élastomère diénique étoilé spécifique, la viscosité Mooney dudit élastomère diénique modifié variant de 30 à 80.

Depuis que les économies de carburant et la nécessité de préserver l'environnement sont devenues une priorité, il est souhaitable de produire des mélanges possédant une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

La réduction de l'hystérèse des mélanges est un objectif permanent qui doit toutefois se faire en conservant intacte l'aptitude à la mise en oeuvre, en particulier à cru, des mélanges, tout en maintenant la résistance au fluage des élastomères.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante.

Dans le cadre des mélanges contenant une charge inorganique renforçante, il a été proposé d'utiliser des copolymères diéniques fonctionnalisés par des dérivés alcoxysilanes.

A titre d'illustration de cet art antérieur, on peut par exemple citer le brevet américain US-A-5 066 721 qui décrit une composition de caoutchouc comprenant un polymère diénique fonctionnalisé par un alcoxysilane ayant au moins un reste alcoxyle non hydrolysable en mélange avec de la silice. On peut également citer la demande de brevet EP A 0 299 074 qui décrit des polymères fonctionnalisés comportant des fonctions alcoxysilanes en bout de chaîne. Ces polymères fonctionnalisés ont été décrits dans l'art antérieur comme efficaces pour réduire l'hystérèse et améliorer la tenue à l'abrasion, cependant leurs propriétés restent insuffisantes pour permettre la mise en oeuvre de ces polymères dans des compositions destinées à constituer des bandes de roulement de pneumatiques.

Il a également été proposé de combiner la fonctionnalisation par des fonctions alcoxysilanes à la fonctionnalisation par d'autres fonctions, notamment des fonctions amine. Ainsi, le brevet EP 0 992 537 décrit une composition de caoutchouc qui comprend un élastomère étendu fonctionnalisé en bout de chaîne par une fonction alcoxysilane et portant à l'autre extrémité ou le long de sa chaîne une ou plusieurs fonctions amine. Par ailleurs, il a également été proposé d'améliorer les propriétés des compositions de caoutchouc en utilisant des élastomères fonctionnalisés en bout de chaîne par des fonctions alcoxysilanes portant un groupement amine, que ce soit en mélange noir, silice ou hybride. On peut citer, par exemple, la demande de brevet US 2005/0203251 qui décrit une composition de caoutchouc renforcée par de la silice contenant un élastomère fonctionnalisé en bout de chaîne par un alcoxysilane portant un groupement amine. Néanmoins, il s'avère que les compositions contenant des élastomères ainsi fonctionnalisés, qu'il s'agisse de mélanges noir, silice ou hybride, ne présentent pas toujours une mise en oeuvre acceptable et une hystérèse satisfaisante pour une utilisation en bande de roulement pour pneumatique.

Les Demanderesses ont décrit dans le document WO 2009133068 A1 un élastomère diénique fonctionnalisé essentiellement constitué par l'espèce couplée d'un élastomère possédant au sein de la chaîne un groupement porteur d'une fonction alcoxysilane et d'une fonction amine, l'atome de silicium de ce groupement liant les deux parties de la chaîne élastomère diénique. Cet élastomère fonctionnalisé confère à la composition le contenant des propriétés mécaniques et dynamiques améliorées, notamment une hystérèse améliorée, tout en conservant une mise en oeuvre à cru satisfaisante, en vue notamment d'une utilisation en bande de roulement pour pneumatique.

Il est une préoccupation constante des concepteurs de matériaux destinés à la fabrication de pneumatiques d'améliorer les compromis de propriétés mécaniques et dynamiques des compositions de caoutchouc en vue d'améliorer les performances du pneumatique les contenant, sans pour autant pénaliser les étapes de sa fabrication ou les propriétés de l'élastomère. Ainsi, par exemple, l'amélioration du compromis de propriétés ne doit pas de faire au détriment du fluage de l'élastomère qui entraîne des inconvénients importants lors du transport et du stockage des caoutchoucs.

Il a été proposé par le passé d'ajouter des élastomères couplés ou étoilés à l'aide d'agents de couplage ou d'étoilage supplémentaires à l'étain ou au silicium pour limiter le fluage. Ainsi, par exemple, la demande de brevet WO 2009/077837 décrit des élastomères fonctionnalisés à chaque extrémité de chaîne associés à des élastomères étoilés, particulièrement par du silicium. Toutefois, les associations illustrées conduisent à une composition de caoutchouc renforcée dont le compromis mise en oeuvre / hystérèse n'est pas satisfaisant pour une application en pneumatique. Les Demanderesses ont par ailleurs décrit dans la demande de brevet WO 2011/042507 un élastomère diénique fonctionnalisé composé d'un élastomère diénique fonctionnalisé en une extrémité de chaîne par une fonction silanol et, dans une certaine proportion, d'un élastomère diénique couplé ou étoilé à base d'étain. Cet élastomère confère à une composition de caoutchouc le contenant des propriétés hystérétiques et de mise en oeuvre satisfaisantes et acceptables pour une utilisation en pneumatique, tout en présentant une résistance au fluage significativement améliorée.

Le problème technique que se propose de résoudre l'invention est d'améliorer encore le compromis de propriétés hystérèse et mise en oeuvre d'une composition de caoutchouc en vue d'une application en pneumatique, sans pénaliser sa fabrication ou les propriétés de l'élastomère contenu dans cette composition, notamment sa résistance au fluage.

Ce but est atteint en ce que les inventeurs viennent de découvrir de manière surprenante au cours de leurs recherches qu'un élastomère diénique modifié comprenant au moins 70% en poids, par rapport au poids total de l'élastomère diénique modifié, d'un élastomère diénique linéaire fonctionnalisé majoritairement en milieu de chaîne par un groupe alcoxysilane, éventuellement partiellement ou totalement hydrolysé en silanol, le groupe alcoxysilane étant éventuellement porteur d'une autre fonction susceptible d'interagir avec une charge renforçante, le groupe alcoxysilane étant lié aux deux branches de l'élastomère diénique par l'intermédiaire de l'atome de silicium, ledit élastomère fonctionnalisé présentant une distribution de masse moléculaire étroite avant fonctionnalisation, et au plus 30% en poids, par rapport au poids total de l'élastomère diénique modifié, d'un élastomère diénique étoilé, présentant une distribution de masse moléculaire étroite avant étoilage, la viscosité Mooney dudit élastomère diénique modifié variant de 30 à 80, confère aux compositions de caoutchouc le contenant une amélioration du compromis mise en oeuvre à cru / hystérèse tout en conservant intacte la résistance au fluage de l'élastomère.

L'invention a donc pour objet un élastomère diénique modifié comprenant :

a) au moins 70% en poids, par rapport au poids total de l'élastomère diénique modifié, d'un élastomère diénique linéaire fonctionnalisé majoritairement en milieu de chaîne par un groupe alcoxysilane, éventuellement partiellement ou totalement hydrolysé en silanol, le groupe alcoxysilane étant éventuellement porteur d'une autre fonction susceptible d'interagir avec une charge renforçante, le groupe alcoxysilane étant lié aux deux branches de l'élastomère diénique par l'intermédiaire de l'atome de silicium, ledit élastomère diénique fonctionnalisé présentant un indice de polymolécularité avant fonctionnalisation inférieur ou égal à 1,6, préférentiellement allant de 1,2 à 1,6.

b) plus de 0 et jusqu'à 30% en poids, par rapport au poids total de l'élastomère diénique modifié, d'un élastomère diénique étoilé et présentant un indice de polymolécularité avant étoilage inférieur ou égal à 1,6, préférentiellement allant de 1,2 à 1,6,

la viscosité Mooney dudit élastomère diénique modifié variant de 30 à 80.

L'invention a encore pour objet une composition de caoutchouc renforcée à base d'au moins une charge renforçante et d'une matrice élastomère comprenant au moins ledit élastomère diénique modifié.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente demande, par « majoritairement » ou « majoritaire » en liaison avec un composé, on entend que ce composé est majoritaire parmi les composés du même type dans la composition, c'est-à-dire que c'est celui qui représente la plus grande fraction pondérale parmi les composés du même type. Ainsi, une espèce fonctionnelle d'un élastomère diénique fonctionnalisé dite majoritaire est celle représentant la plus grande fraction pondérale parmi les espèces fonctionnalisées constituant l'élastomère diénique, par rapport au poids total de l'élastomère diénique fonctionnalisé. Dans un système comprenant un seul composé d'un certain type, celui-ci est majoritaire au sens de la présente invention.

Dans la présente description, on entend par élastomère diénique modifié un élastomère diénique qui comporte un groupement comprenant un ou plusieurs hétéroatomes.

Ce groupement peut se situer en bout de chaîne élastomère principale linéaire. On dira alors que l'élastomère diénique est fonctionnalisé en bout ou en extrémité de chaîne. C'est généralement un élastomère obtenu par réaction d'un élastomère vivant sur un agent de fonctionnalisation, c'est à dire toute molécule au moins mono fonctionnelle, la fonction étant tout type de groupement chimique connu par l'homme de l'art pour réagir avec un bout de chaîne vivant.

Ce groupement peut se situer dans la chaîne élastomère principale linéaire. On dira alors que l'élastomère diénique est couplé ou encore fonctionnalisé en milieu de chaîne, par opposition à la position "en bout de chaîne" et bien que le groupement ne se situe pas précisément au milieu de la chaîne élastomère. C'est généralement un élastomère obtenu par réaction d'un élastomère vivant sur un agent de couplage, c'est à dire toute molécule au moins difonctionnelle, la fonction étant tout type de groupement chimique connu par l'homme de l'art pour réagir avec un bout de chaîne vivant.

Ce groupement peut être central auquel n chaînes élastomères (n>2) sont liées formant une structure en étoile. On dira alors que l'élastomère diénique est étoilé. C'est généralement un élastomère obtenu par réaction d'un élastomère vivant sur un agent d'étoilage, c'est à dire toute molécule multifonctionnelle, la fonction étant tout type de groupement chimique connu par l'homme de l'art pour réagir avec un bout de chaîne vivant.

L'homme du métier comprendra qu'une réaction de fonctionnalisation avec un agent comprenant plus d'une fonction réactive vis-à-vis de l'élastomère vivant, résulte en un mélange d'espèces fonctionnalisées en bout de chaîne et en milieu de chaîne, constituant les chaînes linéaires de l'élastomère fonctionnalisé, ainsi que le cas échéant d'espèces étoilées. Selon les conditions opératoires, principalement le rapport molaire de l'agent de fonctionnalisation aux chaînes vivantes, certaines espèces sont majoritaires dans le mélange.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène, etc.

L'élastomère diénique est choisi préférentiellement dans le groupe des élastomères diéniques fortement insaturés constitué par les polybutadiènes (BR), les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces copolymères, les copolymères de butadiène-styrène (SBR) sont particulièrement préférés.

L'élastomère diénique peut avoir toute microstructure qui est fonction des conditions de polymérisation utilisées. L'élastomère peut être à blocs, statistique, séquencé, microséquencé, etc ... et être préparé en dispersion ou en solution. Lorsqu'il s'agit d'une polymérisation anionique, la microstructure de ces élastomères peut être déterminée par la présence ou non d'un agent randomisant et les quantités d'agent randomisant employées.

Par indice de polymolécularité, on entend au sens de l'invention le rapport masse moléculaire moyenne en poids/masse moléculaire moyenne en nombre. Les masses moléculaires moyennes en poids et en nombre sont mesurées par chromatographie d'exclusion stérique.

Par élastomère diénique linéaire fonctionnalisé majoritairement en milieu de chaîne, soit l'élastomère a), on entend selon l'invention le mélange des espèces linéaires de l'élastomère fonctionnalisé, à savoir les chaînes linéaires fonctionnalisées en extrémité de chaîne et les chaînes linéaires fonctionnalisées en milieu de chaîne, ces dernières étant majoritaires en poids dans ce mélange et représentant de préférence au moins 50%, voire au moins 70% en poids de ce mélange.

Selon un mode de réalisation préféré, l'élastomère diénique modifié selon l'invention comprend au moins 80% en poids, par rapport au poids total de l'élastomère diénique modifié, de l'élastomère diénique linéaire fonctionnalisé majoritairement en milieu de chaîne a).

Selon un autre mode de réalisation préféré, l'élastomère diénique modifié selon l'invention comprend au plus 20% en poids, par rapport au poids total de l'élastomère diénique modifié, de l'élastomère diénique étoilé b).

Selon un mode de réalisation particulièrement préféré, l'élastomère diénique modifié selon l'invention comprend au moins 80% en poids, par rapport au poids total de l'élastomère diénique modifié, de l'élastomère diénique linéaire fonctionnalisé majoritairement en milieu de chaîne a) et au plus 20% en poids, par rapport au poids total de l'élastomère diénique modifié, de l'élastomère diénique étoilé b).

Selon une variante de l'invention, l'élastomère diénique a) ne comporte pas d'autre fonction que celle comprenant l'atome de silicium directement lié à la chaîne élastomérique (c'est-à-dire le groupe alcoxysilane).

Selon une autre variante de l'invention, l'élastomère diénique a) comporte également une autre fonction susceptible d'interagir avec une charge renforçante, cette fonction étant avantageusement portée par le silicium du groupe alcoxysilane, directement ou par l'intermédiaire d'un groupe espaceur. Cette variante s'entend comme n'excluant pas le fait que le groupe alcoxysilane comprenant l'atome de silicium directement lié à la chaîne élastomérique interagit de manière privilégiée avec la charge renforçante.

On entend par "groupe alcoxysilane interagissant de manière privilégiée avec la charge renforçante" ou "fonction susceptible d'interagir avec une charge renforçante", tout groupe alcoxysilane ou fonction capable de former, au sein d'une composition de caoutchouc renforcée au moyen d'une charge, une liaison physique ou chimique avec ladite charge. Cette interaction peut s'établir par exemple par le biais de liaisons covalentes, hydrogène, ioniques et/ou électrostatiques entre ladite fonction et des fonctions présentes sur des charges.

Le radical alcoxy du groupe alcoxysilane peut être de formule R'O-, où R' représente un groupe alkyle, substitué ou non substitué, en Ci-Cio, voire en $C_1$-$C_8$, de préférence un groupe alkyle en $C_1$-$C_4$, plus préférentiellement méthyle et éthyle.

Par fonction susceptible d'interagir avec une charge renforçante, on entend de préférence des fonctions comprenant au moins un hétéroatome choisi parmi N, S, O, P. On peut, à titre d'exemple, citer parmi ces fonctions les amines primaires, secondaires ou tertiaires, cycliques ou non, les isocyanates, les imines, les cyano, la fonction thiol, les carboxylates, les époxydes et les phosphines primaires, secondaires ou tertiaires.

Ainsi, à titre de fonction amine secondaire ou tertiaire, on peut citer les amines substituées par des radicaux alkyle en $C_1$-$C_{10}$, de préférence alkyle en $C_1$-$C_4$, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements méthylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-.

A titre de fonction imine, on peut citer les cétimines. Par exemple, conviennent les groupements (1,3-diméthylbutylidène) amino-, (éthylidène)amino-, (1-méthylpropylidène)amino-, (4-N,N-diméthylaminobenzylidène)amino-, (cyclohexylidène)amino-, dihydroimidazole et imidazole.

A titre de fonction carboxylate, on peut citer les acrylates ou les méthacrylates. Une telle fonction est de préférence un méthacrylate.

A titre de fonction époxyde, on peut citer les groupements époxy ou glycidyloxy.

A titre de fonction phosphine secondaire ou tertiaire, on peut citer les phosphines substituées par des radicaux alkyle en $C_1$-$C_{10}$, de préférence alkyle en $C_1$-$C_4$, plus préférentiellement un radical méthyle ou éthyle, ou alors la diphénylphosphine. Par exemple, conviennent les groupements méthylphosphino-, diméthylphosphino-, éthylphosphino-, diéthylphosphino, éthylméthylphosphino- et diphénylphosphino-.

De préférence, la fonction susceptible d'interagir avec une charge renforçante de l'élastomère diénique a) est une fonction amine tertiaire, de préférence diéthylamine ou diméthylamine.

Selon une variante de l'invention, l'autre fonction susceptible d'interagir avec une charge renforçante est directement liée à l'atome de silicium lui-même directement lié à l'élastomère diénique.

Selon une autre variante de l'invention, l'autre fonction susceptible d'interagir avec une charge renforçante et l'atome de silicium lié à l'élastomère diénique sont reliés entre eux par un groupement espaceur qui peut être un atome ou un groupe d'atomes. Le groupement espaceur peut être un radical hydrocarboné divalent, linéaire ou ramifié, aliphatique en Ci-Cis, saturé ou non, cyclique ou non, ou un radical hydrocarboné divalent aromatique en $C_6$-$C_{18}$ et peut contenir un ou plusieurs radicaux aromatiques et/ou un ou plusieurs hétéroatomes. Le radical hydrocarboné peut éventuellement être substitué.

Selon une variante préférée de l'invention, le groupement espaceur est un radical hydrocarboné divalent, linéaire ou ramifié, aliphatique en $C_1$-$C_{10}$, plus préférentiellement un radical hydrocarboné divalent linéaire aliphatique en $C_1$-$C_5$, plus préférentiellement encore le radical hydrocarboné divalent linéaire en $C_3$.

Les différents aspects, préférentiels ou non, qui précèdent et qui concernent notamment la nature de l'autre fonction susceptible d'interagir avec une charge renforçante, la nature du groupement espaceur, la nature du groupe alcoxysilane et la nature de l'élastomère diénique sont combinables entre eux.

Selon des variantes avantageuses de l'invention, au moins une des quatre caractéristiques suivantes est respectée et de préférence les quatre :

- l'autre fonction susceptible d'interagir avec une charge renforçante est une amine tertiaire, plus particulièrement un groupement diéthylamino- ou diméthylamino-,
- le groupement espaceur est un radical hydrocarboné linéaire en $C_1$-$C_5$, plus préférentiellement encore le radical hydrocarboné linéaire en $C_3$,
- la fonction comprenant l'atome de silicium est un méthoxysilane ou éthoxysilane, éventuellement partiellement ou totalement hydrolysé en silanol,
- l'élastomère diénique est un copolymère butadiène-styrène.

L'élastomère diénique étoilé b) est de préférence un élastomère diénique étoilé à base d'étain ou de silicium.

L'élastomère diénique étoilé b) est de préférence un élastomère diénique étoilé à trois ou quatre branches.

L'élastomère diénique fonctionnalisé en milieu de chaîne a) et l'élastomère diénique étoilé b) peuvent avoir

avant fonctionnalisation et étoilage la même microstructure ou une microstructure différente.

De préférence, l'élastomère diénique linéaire fonctionnalisé majoritairement en milieu de chaîne a) et l'élastomère diénique étoilé b) ont avant fonctionnalisation et étoilage la même microstructure.

De préférence encore, l'élastomère diénique linéaire fonctionnalisé majoritairement en milieu de chaîne a) et l'élastomère diénique étoilé b) ont avant fonctionnalisation et étoilage la même microstructure et la même macrostructure.

L'élastomère diénique modifié selon l'invention peut être obtenu par un procédé tel que décrit ci-après.

La première étape d'un procédé de préparation de l'élastomère diénique modifié est la polymérisation anionique d'au moins un monomère diène conjugué en présence d'un initiateur de polymérisation.

En tant qu'initiateur de polymérisation, on peut utiliser tout initiateur anionique mono fonctionnel connu. Toutefois un initiateur contenant un métal alcalin tel que le lithium est utilisé à titre préférentiel.

Comme initiateurs organolithiens conviennent notamment ceux comportant une liaison carbone-lithium. De préférence, on utilisera un initiateur organolithien hydrocarboné ne comportant pas d'hétéroatome. Des composés représentatifs sont les organolithiens aliphatiques tels que l'éthyllithium, le n-butyllithium (n-BuLi), l'isobutyllithium, etc ...

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

La polymérisation peut être effectuée en continu ou en discontinu. La polymérisation en continu peut être effectuée de manière connue dans un ou plusieurs réacteurs supposés parfaitement agités par l'homme de l'art. Dans le cas de la polymérisation dans plusieurs réacteurs, le nombre de réacteurs varie en général de 2 à 15 et de préférence de 2 à 9.

On effectue généralement la polymérisation à une température variant de 20 °C à 150 °C et de préférence de 30 °C à 120 °C.

Selon une mise en oeuvre du procédé en continu, la polymérisation peut être avantageusement réalisée dans plusieurs réacteurs en contrôlant et en équilibrant la conversion dans chaque réacteur. Par exemple, le maintien dans chaque réacteur d'un taux de conversion individuel dans un domaine de valeurs qui dépend du taux de conversion individuel théorique, calculé à partir du taux de conversion global en sortie de polymérisation divisé par le nombre de réacteurs, peut contribuer à l'obtention d'un indice de polymolécularité réduit d'au plus 1,6. De préférence alors, le taux de conversion individuel peut varier de plus ou moins 20% de la conversion globale par rapport à cette valeur théorique.

Il est connu que le contrôle de la conversion dans chaque réacteur est notamment assuré par la température, le temps de séjour, la quantité d'agent polaire et la quantité de monomère entrant dans chaque réacteur.

L'équilibrage des conversions dans chaque réacteur, tel qu'indiqué précédemment, permet de minimiser l'indice de polymolécularité.

Selon une mise en oeuvre du procédé en continu, la polymérisation dans plusieurs réacteurs en série peut être avantageusement effectuée en réalisant une rampe de température dans le domaine de températures indiqué plus haut, de sorte que la température dans chaque réacteur est supérieure ou égale à la température du réacteur qui le précède immédiatement, la température du dernier réacteur étant strictement supérieure à la température du premier réacteur.

Selon une mise en oeuvre du procédé en continu, la polymérisation dans plusieurs réacteurs en série peut également être avantageusement effectuée avec des injections complémentaires de solvants et/ou de monomères dans au moins un autre réacteur que le premier. Ces monomères et/ou solvants sont alors épurés de sorte que la proportion du nombre de chaînes mortes dans le flux en sortie du dernier réacteur de polymérisation est inférieure à 30%, de préférence inférieure à 10%, du nombre de chaînes vivantes initiées dans le premier réacteur. On entend par chaînes mortes, les chaînes de polymères dont la propagation a été stoppée par réaction avec des impuretés et qui ne sont plus réactives en sorties de polymérisation.

Ces mises en oeuvre du procédé de polymérisation en continu dans plusieurs réacteurs sont combinables entre elles.

On peut bien entendu également ajouter en fin de polymérisation un agent de transmétallation pour modifier la réactivité de l'extrémité de chaîne vivante.

L'élastomère diénique vivant issu de la polymérisation est ensuite fonctionnalisé pour préparer l'élastomère diénique modifié selon l'invention.

Selon une première variante de préparation de l'élastomère diénique modifié selon l'invention, on mélange l'élastomère diénique linéaire fonctionnalisé majoritairement en milieu de chaîne a) et l'élastomère diénique étoilé b), dans les proportions appropriées.

L'élastomère diénique linéaire fonctionnalisé majoritairement en milieu de chaîne a) peut être obtenu par réaction de l'élastomère diénique vivant issu de l'étape de polymérisation avec un agent de couplage susceptible d'introduire en milieu de chaîne polymérique un groupe alcoxysilane, hydrolysable ou non, porteur le cas échéant d'une fonction susceptible d'interagir avec une charge renforçante au sein d'une composition de caoutchouc, le groupe alcoxysilane étant lié aux deux branches de l'élastomère diénique par l'intermédiaire de l'atome de silicium.

L'élastomère diénique étoilé b) peut être obtenu de manière connue en soi par réaction du bout de chaîne vivant avec un agent d'étoilage, c'est à dire toute molécule multifonctionnelle, la fonction étant tout type de groupement chimique connu par l'homme de l'art pour réagir avec un bout de chaîne vivant.

Le mélangeage des deux élastomères peut s'effectuer dans un solvant inerte par exemple un hydrocarbure aliphatique ou alicyclique comme le pentane, l'hexane, l'heptane, l'iso-octane, le cyclohexane ou un hydrocarbure aromatique comme le benzène, le toluène, le xylène, qui peut être le même que le solvant de polymérisation. On effectuera alors le mélangeage à une température comprise entre 20°C et 120°C et de préférence voisine de 30°C à 110°C.

Selon une deuxième variante de préparation de l'élastomère diénique modifié selon l'invention, l'élastomère diénique vivant issu de l'étape de polymérisation est soumis à la réaction d'un agent d'étoilage et à celle d'un agent de couplage susceptible d'introduire en milieu de chaîne polymérique un groupe alcoxysilane, hydrolysable ou non, porteur le cas échéant d'une fonction susceptible d'interagir avec une charge renforçante au sein d'une composition de caoutchouc, le groupe alcoxysilane étant lié aux deux branches de l'élastomère diénique par l'intermédiaire de l'atome de silicium.

L'agent de couplage utilisable selon ces deux variantes de l'invention peut être porteur d'une fonction alcoxysilane hydrolysable en fonction silanol ou encore d'une fonction alcoxysilane non hydrolysable, et éventuellement d'une autre fonction susceptible d'interagir avec une charge renforçante, les deux fonctions étant directement liées entre elles ou par l'intermédiaire d'un groupement espaceur. L'autre fonction susceptible d'interagir avec une charge renforçante et le groupement espaceur sont tels que définis plus haut.

L'agent de couplage peut être représenté par la formule (I) suivante :

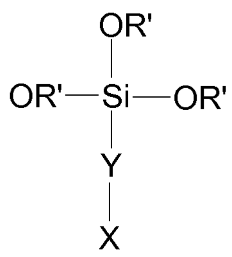

Formule (I)

dans laquelle,

- Y est un radical hydrocarboné divalent aliphatique, saturé ou non, cyclique ou non, en $C_1$-$C_{18}$, aromatique en $C_6$-$C_{18}$, de préférence un radical hydrocarboné divalent, linéaire ou ramifié, aliphatique en $C_1$-$C_{10}$, plus préférentiellement un radical hydrocarboné divalent linéaire aliphatique en $C_1$-$C_5$, plus préférentiellement encore le radical hydrocarboné linéaire en $C_2$ ou $C_3$.
- X est un atome d'hydrogène ou une fonction susceptible d'interagir avec une charge renforçante,
- les radicaux R', substitués ou non substitués, identiques ou différents, représentent un groupe alkyle en $C_1$-$C_{10}$, voire en $C_1$-$C_8$, de préférence un groupe alkyle en $C_1$-$C_4$, plus préférentiellement méthyle et éthyle.

La fonction susceptible d'interagir avec une charge renforçante est telle que définie plus haut.

Selon une variante de l'invention, la fonction susceptible d'interagir avec une charge renforçante est une amine primaire, protégée ou non, secondaire, protégée ou non, ou tertiaire. L'atome d'azote peut alors être substitué par deux groupements, identiques ou différents, pouvant être un radical trialkyl silyl, le groupement alkyle ayant 1 à 4 atomes de carbone, ou un radical alkyle en $C_1$-$C_{10}$, de préférence alkyle en $C_1$-$C_4$, plus préférentiellement un radical méthyle ou éthyle, ou alors les deux substituants de l'azote forment avec celui-ci un hétérocycle contenant un atome d'azote et au moins un atome de carbone, de préférence de 2 à 6 atomes de carbone,

On peut citer par exemple à titre d'agent de couplage les (N,N-dialkylaminopropyl)trialcoxysilanes, les (N-alkylaminopropyl)trialcoxysilanes dont la fonction amine secondaire est protégée par un groupement trialkyl silyl et les aminopropyltrialcoxysilanes dont la fonction amine primaire est protégée par deux groupements trialkyl silyl.

Préférentiellement, l'agent de couplage peut être choisi parmi le 3-(N,N-diméthylaminopropyl)triméthoxysilane, le 3-(N,N-diméthylaminopropyl)triéthoxysilane , le 3-(N,N-diéthylaminopropyl)triméthoxysilane, le 3-(N,N-diéthylaminopropyl)triéthoxysilane, le 3-(N,N-dipropylaminopropyl)triméthoxysilane, le 3-(N,N-dipropylaminopropyl)triéthoxysilane, le 3-(N,N-dibutylaminopropyl)triméthoxysilane, le 3-(N,N-dibutylaminopropyl)triéthoxysilane, le 3-(N,N-dipentylaminopropyl)triméthoxysilane, le 3-(N,N-dipentylaminopropyl)triéthoxysilane, le 3-(N,N-dihexylaminopropyl)triméthoxysilane, le 3-(N,N-dihexylaminopropyl)triéthoxysilane, le 3-(hexamethylèneaminopropyl)triméthoxysilane, le 3-(hexamethylèneaminopropyl)triéthoxysilane, le 3-(morpholinopropyl)triméthoxysilane, le 3-(morpholinopropyl)triéthoxysilane, le 3-(piperidinopropyl)triméthoxysilane, le 3-(piperidinopropyl)triéthoxysilane. Plus préférentiellement, l'agent de couplage est le 3-(N,N-diméthylaminopropyl)triméthoxysilane.

Préférentiellement, l'agent de couplage peut être choisi parmi le 3-(N,N-méthyltriméthylsilylaminopropyl)triméthoxysilane, le 3-(N,N-méthyltriméthylsilylaminopropyl)triéthoxysilane, le 3-(N,N-éthyltriméthylsilylaminopropyl)triméthoxysilane, le 3-(N,N-éthyltriméthylsilylaminopropyl)triéthoxysilane, le 3-(N,N-propyltriméthylsilylaminopropyl)triméthoxysilane, le 3-(N,N-propyltriméthylsilylaminopropyl)triéthoxysilane. Plus préférentiellement, l'agent de couplage est le 3-(N,N-méthyltriméthylsilylaminopropyl)triméthoxysilane.

Préférentiellement, l'agent de couplage peut être choisi parmi le 3-(N,N-bistriméthylsilylaminopropyl)triméthoxysilane et le 3-(N,N-bistriméthylsilylaminopropyl)triéthoxysilane. Plus préférentiellement, l'agent de couplage est le 3-(N,N-bistriméthylsilylaminopropyl)triméthoxysilane.

Selon une variante de l'invention, la fonction susceptible d'interagir avec une charge renforçante est une fonction isocyanate. Préférentiellement, l'agent de couplage peut être choisi parmi le 3-(isocyanatopropyl)triméthoxysilane et le 3-(isocyanatopropyl)triéthoxysilane.

Selon une variante de l'invention, la fonction susceptible d'interagir avec une charge renforçante est une fonction imine. Préférentiellement, l'agent de couplage peut être choisi parmi le N-(1,3-diméthylbutylidène)-3-(triméthoxysilyl)-1-propanamine, le N-(1,3-diméthylbutylidène)-3-(triéthoxysilyl)-1-propanamine, le N-(1,3-méthyléthylidène)-3-(triméthoxysilyl)-1-propanamine, le N-(1,3-méthyléthylidène)-3-(triéthoxysilyl)-1-propanamine, le N-ethylidène-3-(triméthoxysilyl)-1-propanamine, le N-ethylidène-3-(triéthoxysilyl)-1-propanamine, le N-(1-méthylpropylidène)-3-(triméthoxysilyl)-1-propanamine, le N-(1-méthylpropylidène)-3-(triéthoxysilyl)-1-propanamine, le N-(4-N,N-diméthylaminobenzylidène)-3-(triméthoxysilyl)-1-propanamine, le N-(4-N,N-diméthylaminobenzylidène)-3-(triéthoxysilyl)-1-propanamine, le N-(cyclohexylidène)-3-(triméthoxysilyl)-1-propanamine, le N-(cyclohexylidène)-3-(triéthoxysilyl)-1-propanamine, le N-(3-triméthoxysilylpropyl)-4,5-dihydroimidazole, le N-(3-triéthoxysilylpropyl)-4,5-dihydroimidazole, le N-(3-triméthoxysilylpropyl)-4,5-imidazole, N-(3-triéthoxysilylpropyl)-4,5-imidazole.

Selon une variante de l'invention, la fonction susceptible d'interagir avec une charge renforçante est une fonction cyano. Préférentiellement, l'agent de fonctionnalisation peut être choisi parmi le 3-(cyanopropyl)triméthoxysilane et le 3-(cyanopropyl)triéthoxysilane.

Selon une variante de l'invention, la fonction susceptible d'interagir avec une charge renforçante est une fonction thiol, protégée ou non. On peut citer à titre d'exemple les (S-trialkylsilylmercaptopropyl)trialcoxysilanes et les (S-trialkylsilylmercaptoéthyl)trialcoxysilanes. Préférentiellement, l'agent de couplage peut être choisi parmi le (S-triméthylsilylmercaptopropyl)triméthoxysilane, le (S-triméthylsilylmercaptopropyl)triéthoxysilane, le (S-tert-butyldiméthylsilylmercaptopropyl)triméthoxysilane, le (S-tert-butyldiméthylsilylmercaptopropyl)triéthoxysilane, le (S-triméthylsilylmercaptoéthyl)triméthoxysilane, le (S-triméthylsilylmercaptoéthyl)triéthoxysilane, le (S-tert-butyldiméthylsilylmercaptoéthyl)triméthoxysilane, le (S-tert-butyldiméthylsilylmercaptoéthyl)triéthoxysilane.

Selon une variante de l'invention, la fonction susceptible d'interagir avec une charge renforçante est une fonction carboxylate. A titre de fonction carboxylate, on peut citer les acrylates ou les méthacrylates. Une telle fonction est de préférence un méthacrylate. Préférentiellement, l'agent de couplage peut être choisi parmi le 3-(méthacryloyloxypropyl)triméthoxysilane, et le 3-(méthacryloyloxypropyl)triéthoxysilane.

Selon une variante de l'invention, la fonction susceptible d'interagir avec une charge renforçante est une fonction époxyde. Préférentiellement, l'agent de couplage peut être choisi parmi le 2-(glycidyloxyéthyl)triméthoxysilane, le 2-(glycidyloxyéthyl)triéthoxysilane le 3-(glycidyloxypropyl)triméthoxysilane, le 3-(glycidyloxypropyl)triéthoxysilane, le 2-(3,4-époxycyclohexyl)-éthyltriméthoxysilane, le 2-(3,4-époxycyclohexyl)-éthyltriéthoxysilane.

Selon une variante de l'invention, la fonction susceptible d'interagir avec une charge renforçante est une fonction phosphine primaire, protégée ou non, secondaire, protégée ou non, ou tertiaire. Préférentiellement, l'agent de couplage peut être choisi parmi le 3-(P,P-bistriméthylsilylphosphinopropyl)triméthoxysilane, le 3-(P,P-bistriméthylsilylphosphinopropyl)triéthoxysilane, le 3-(méthyltriméthylsilylphosphinopropyl)triméthoxysilane, le 3-(méthyltriméthylsilylphosphinopropyl)triéthoxysilane, le 3-(éthyltriméthylsilylphosphinopropyl)triméthoxysilane, le 3-(éthyltriméthylsilylphosphinopropyl)triéthoxysilane, le 3-(diméthylphosphinopropyl)triméthoxysilane, le 3-(diméthylphosphinopropyl)triéthoxysilane, le 3-(diéthylphosphinopropyl)triméthoxysilane, le 3-(diéthylphosphinopropyl)triéthoxysilane, le 3-(éthylméthylphosphinopropyl)triméthoxysilane, le 3-(éthylméthylphosphinopropyl)triéthoxysilane, le 3-(diphénylphosphinopropyl)triméthoxysilane, le 3-(diphénylphosphinopropyl)triéthoxysilane.

Le rapport molaire entre l'agent de couplage et l'initiateur des chaînes polymères vivantes varie de 0,30 à 0,80, préférentiellement de 0,40 à 0,65 et encore plus préférentiellement de 0,45 à 0,55.

Selon les deux variantes de préparation de l'élastomère diénique modifié de l'invention, à titre préférentiel, les agents d'étoilage sont des agents à base d'étain ou de silicium de fonctionnalité supérieure à 2, et pouvant être représentés par les formules $SnR_1X'_3$, $SnHX'_3$, $SnX'_4$, $SiR_1X'_3$, $SiHX'_3$, $SiX'_4$, $SiR_1(OR'_1)_3$, $Si(OR'_1)_4$ avec $R_1$ et $R'_1$ étant indépendamment un groupement alkyle, aralkyle ou vinyle possédant de 1 à 20 atomes de carbone et X' un halogène.

Selon un mode de réalisation particulier de la deuxième variante de préparation de l'élastomère diénique modifié selon l'invention, l'agent de couplage et l'agent d'étoilage sont le même composé. Selon ce mode de réalisation

particulier, la fonctionnalisation peut avantageusement s'effectuer en continu et notamment selon les modes opératoires décrits dans la demande WO 2015018599 A1.

Selon un autre mode de réalisation de la deuxième variante de préparation de l'élastomère diénique modifié selon l'invention, l'agent de couplage et l'agent d'étoilage sont distincts. Selon ce mode de réalisation particulier, la fonctionnalisation de l'élastomère diénique vivant issu de l'étape de polymérisation peut s'effectuer à une température variant de 20 à 120°C, en présence dans un premier temps d'une quantité appropriée d'un agent d'étoilage pour étoiler au plus 30% en poids de l'élastomère diénique vivant. Puis, dans un deuxième temps, on fonctionnalise les chaînes vivantes restantes de l'élastomère diénique obtenu après la première étape par adjonction d'un agent de couplage susceptible d'introduire en milieu de chaîne polymérique le groupe alcoxysilane porteur le cas échéant d'une fonction susceptible d'interagir avec une charge renforçante au sein d'une composition de caoutchouc et réaction avec cet agent.

Selon les variantes de l'invention selon lesquelles l'agent de fonctionnalisation est porteur d'une fonction amine primaire ou secondaire protégée, le procédé de synthèse peut se poursuivre par une étape de déprotection de l'amine primaire ou secondaire. Cette étape est mise en oeuvre après la réaction de modification. On peut à titre d'exemple faire réagir les chaînes fonctionnalisées par le groupement amine protégé avec un acide, une base, un dérivé fluoré tel le fluorure de tétrabutylammonium, un sel d'argent tel que le nitrate d'argent, etc...pour déprotéger cette fonction amine. Ces différentes méthodes sont décrites dans l'ouvrage « Protective Groups in Organic Synthesis, T. W. Green, P. G. M. Wuts, Third Edition,1999 ». Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction thiol protégée, le procédé de synthèse peut se poursuivre par une étape de déprotection du thiol. Cette étape est mise en oeuvre après la réaction de modification. On peut à titre d'exemple faire réagir les chaînes fonctionnalisées par le groupement thiol protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction phosphine primaire ou secondaire protégée, le procédé de synthèse peut se poursuivre par une étape de déprotection de la phosphine. Cette étape est mise en oeuvre après la réaction de modification. On peut à titre d'exemple faire réagir les chaînes fonctionnalisées par le groupement phosphine protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon des variantes de l'invention, le procédé de synthèse peut comprendre une étape d'hydrolyse des fonctions alcoxysilanes hydrolysables, par adjonction d'un composé acide, basique ou neutre tel que décrit dans le document EP 2 266 819 A1. Les fonctions hydrolysables sont alors transformées en totalité ou en partie en fonction silanol.

Le procédé de synthèse de l'élastomère diénique modifié selon l'invention peut se poursuivre de manière connue en soi par les étapes de récupération de l'élastomère modifié.

Selon des variantes de ce procédé, ces étapes comprennent une étape de stripping en vue de récupérer l'élastomère issu des étapes antérieures sous forme sèche. Cette étape de stripping peut avoir pour effet d'hydrolyser tout ou partie des fonctions alcoxysilanes hydrolysables de l'élastomère diénique modifié pour les transformer en fonctions silanol. Avantageusement, au moins 50 à 70% molaire des fonctions peuvent ainsi être hydrolysées.

L'élastomère diénique modifié conforme à l'invention présente une résistance au fluage satisfaisante, ce qui induit une bonne tenue lors du stockage et du transport de ce caoutchouc.

L'élastomère diénique modifié selon l'invention peut être avantageusement utilisé, pour une application en pneumatique, dans une composition de caoutchouc renforcée par au moins une charge inorganique telle que la silice, dont il améliore le compromis mise en oeuvre à cru / hystérèse. Cette composition de caoutchouc fait également l'objet de l'invention.

Ainsi, comme expliqué précédemment, un autre objet de l'invention est une composition de caoutchouc renforcée à base d'au moins une charge renforçante et d'une matrice élastomère comprenant au moins un élastomère diénique modifié tel que décrit plus haut. Il doit être entendu que la composition de caoutchouc peut comprendre un ou plusieurs de ces élastomères diéniques modifiés selon l'invention.

La composition de caoutchouc renforcée selon l'invention peut se présenter à l'état réticulé ou à l'état non réticulé, autrement dit réticulable.

L'élastomère diénique modifié selon l'invention peut être, selon différentes variantes, utilisé seul dans la composition ou en coupage avec au moins un autre élastomère diénique conventionnel, qu'il soit étoilé, couplé, fonctionnalisé ou non. Préférentiellement, cet autre élastomère diénique utilisé dans l'invention est choisi dans le groupe des élastomères diéniques fortement insaturés constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR). On peut également envisager un coupage avec tout élastomère synthétique autre que diénique, voire avec tout polymère autre qu'élastomère, par exemple un polymère thermoplastique.

Lorsque l'élastomère conventionnel utilisé en coupage est du caoutchouc naturel et/ou un ou plusieurs polymères diéniques comme par exemple les polybutadiènes, les polyisoprènes, les copolymères butadiène-styrène ou butadiène-styrène-isoprène, cet élastomère ou ces élastomères, modifiés ou non, peuvent alors être présents de 1 à 70 parties en poids pour 100 parties d'élastomère diénique modifié selon l'invention.

On notera que l'amélioration des propriétés de la composition selon l'invention sera d'autant plus élevée que la proportion du ou des élastomères différents des élastomères diéniques modifiés de l'invention dans cette composition sera réduite.

Ainsi, de préférence, la matrice élastomère comprend majoritairement en masse l'élastomère diénique modifié selon l'invention.

Plus préférentiellement, la matrice élastomère est uniquement constituée de l'élastomère diénique modifié selon l'invention.

La composition de caoutchouc de l'invention comprend, outre au moins une matrice élastomère telle que décrit ci-dessus, au moins une charge renforçante.

On peut utiliser tout type de charge renforçante connue pour ses capacités à renforcer une composition de caoutchouc utilisable pour la fabrication de bandes de roulement de pneumatiques, par exemple du noir de carbone, une charge inorganique renforçante telle que de la silice à laquelle est associé de manière connue un agent de couplage, ou encore un mélange de ces deux types de charge.

Comme noirs de carbone conviennent tous les noirs de carbone, utilisés individuellement ou sous forme de mélanges, notamment les noirs du type HAF, ISAF, SAF conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375.

Comme charge inorganique renforçante, doit être entendu dans la présente demande, par définition, toute charge inorganique ou minérale quelles que soient sa couleur et son origine (naturelle ou de synthèse), capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyle (-OH) à sa surface.

Comme charges inorganiques renforçantes conviennent notamment des charges minérales du type siliceux, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. On citera également les charges minérales du type alumineux, en particulier de l'alumine ($Al_2O_3$) ou des (oxyde)hydroxydes d'aluminium, ou encore des oxydes de titane renforçants, par exemple décrits dans US 6 610 261 et US 6 747 087. Comme charges renforçantes conviennent également des charges renforçantes d'une autre nature, notamment du noir de carbone, dès lors que ces charges renforçantes seraient recouvertes d'une couche siliceuse, ou bien comporteraient à leur surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges renforçantes, en particulier de charges siliceuses hautement dispersibles telles que décrites précédemment.

De manière préférentielle, le taux de charge renforçante totale (noir de carbone et/ou autre charge renforçante telle que silice) est compris entre 10 et 200 pce, plus préférentiellement entre 30 et 150 pce, et encore plus préférentiellement entre 70 et 130 pce, l'optimum étant de manière connue différent selon les applications particulières visées.

Selon une variante de l'invention, la charge renforçante est majoritairement autre que du noir de carbone, c'est-à-dire qu'elle comprend plus de 50% en poids du poids total de la charge renforçante, d'une ou de plusieurs charges autres que du noir de carbone, notamment une charge inorganique renforçante telle que la silice, voire elle est exclusivement constituée d'une telle charge.

Selon cette variante, lorsque du noir de carbone est également présent, il peut être utilisé à un taux inférieur à 20 pce, plus préférentiellement inférieur à 10 pce (par exemple entre 0,5 et 20 pce, notamment de 1 à 10 pce).

Selon une autre variante de l'invention, on utilise une charge renforçante comportant majoritairement du noir de carbone, et optionnellement de la silice ou une autre charge inorganique.

Lorsque la charge renforçante comprend une charge nécessitant l'utilisation d'un agent de couplage pour établir

la liaison entre la charge et l'élastomère, la composition de caoutchouc selon l'invention comprend en outre, de manière classique, un agent susceptible d'assurer efficacement cette liaison. Lorsque la silice est présente dans la composition à titre de charge renforçante, on peut utiliser comme agents de couplage des organosilanes, notamment des alkoxysilanes polysulfurés ou des mercaptosilanes, ou encore des polyorganosiloxanes au moins bifonctionnels.

Un tel agent de couplage ne doit pas être confondu avec l'agent de couplage utilisé pour la synthèse de l'élastomère diénique modifié décrite précédemment.

Dans la composition selon l'invention, le taux d'agent de couplage est avantageusement inférieur à 20 pce, étant entendu qu'il est en général souhaitable d'en utiliser le moins possible. Son taux est préférentiellement compris entre 0,5 et 12 pce. La présence de l'agent de couplage dépend de celle de la charge inorganique renforçante. Son taux est aisément ajusté par l'homme du métier selon le taux de cette charge; il est typiquement de l'ordre de 0,5% à 15% en poids par rapport à la quantité de charge inorganique renforçante autre que du noir de carbone.

La composition de caoutchouc selon l'invention peut également contenir, en complément des agents de couplage, des activateurs de couplage, des agents de recouvrement des charges ou plus généralement des agents d'aide à la mise en oeuvre susceptibles de manière connue, grâce à une amélioration de la dispersion de la charge dans la matrice de caoutchouc et à un abaissement de la viscosité de la composition, d'améliorer sa faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisé telles que décrites dans les demandes WO-A-2006/069792, WO-A-2006/069793, WO-A-2008/003434 et WO-A-2008/003435.

La composition de caoutchouc selon l'invention peut comporter également tout ou partie des additifs usuels habituellement utilisés dans les compositions d'élastomères destinées à la fabrication de pneumatiques, comme par exemple des pigments, des charges non renforçantes, des agents de protection tels que cires anti-ozone, anti-ozonants chimiques, anti-oxydants, des agents anti-fatigue, des agents plastifiants, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé de préparation d'une composition selon l'invention, comprend généralement :

(i) la réalisation, à une température maximale comprise entre 130 °C et 180 °C, d'un premier temps de travail thermomécanique des constituants de la composition comprenant l'élastomère diénique modifié selon l'invention et une charge renforçante, à l'exception d'un système de réticulation, puis
(ii) la réalisation, à une température inférieure à ladite température maximale dudit premier temps, d'un second temps de travail mécanique au cours duquel est incorporé ledit système de réticulation.

Ce procédé peut également comprendre, préalablement à la réalisation des étapes (i) et (ii) précitées, les étapes de la préparation de l'élastomère diénique modifié selon le procédé décrit plus haut.

L'invention a également pour objet un article semi-fini en caoutchouc pour pneumatique, comprenant une composition de caoutchouc selon l'invention, réticulable ou réticulée, ou constitué d'une telle composition.

La composition finale ainsi obtenue peut ensuite être calandrée, par exemple sous la forme d'une feuille, d'une plaque ou encore extrudée, par exemple pour former un profilé de caoutchouc utilisable comme produit semi-fini en caoutchouc destiné au pneumatique.

En raison du compromis hystérèse / mise en oeuvre à cru amélioré tout en maintenant la résistance au fluage de l'élastomère qui caractérise une composition de caoutchouc renforcée selon l'invention, on notera qu'une telle composition peut constituer tout produit semi-fini du pneumatique et tout particulièrement la bande de roulement, diminuant notamment sa résistance au roulement.

L'invention a donc enfin pour objet un pneumatique comportant un article semi-fini selon l'invention, en particulier une bande de roulement.

Les caractéristiques précitées de la présente invention, ainsi que d'autres, seront mieux comprises à la lecture

de la description suivante de plusieurs exemples de réalisation de l'invention, donnés à titre illustratif et non limitatif.

Exemples

Mesures et tests utilisés

Chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45$\mu$m avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triéthylamine, le débit de 1 $mL.min^{-1}$, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 $\mu$L. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique (par rapport à la masse du polymère) de motifs type styrène, 23% massique (par rapport à la partie butadiénique) de motifs type 1-2 et 50% massique (par rapport à la partie butadiénique) de motifs type 1-4 trans.

Chromatographie d'exclusion stérique haute résolution

La technique de SEC haute résolution (SEC HR) est utilisée pour déterminer les pourcentages massiques des différentes populations de chaînes présentes dans un échantillon de polymère.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45 $\mu$m avant injection.

L'appareillage utilisé est une chaîne chromatographique "WATERS alliance 2695". Le solvant d'élution est le tétrahydrofurane, le débit de 0,2 $ml.min^{-1}$, la température du système de 35 °C. Un jeu de trois colonnes identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 $\mu$L. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique (par rapport à la masse du polymère) de motifs type styrène, 23 % massique (par rapport à la partie butadiénique) de motifs type 1,2 et 50 % massique (par rapport à la partie butadiénique) de motifs type 1,4-trans.

Viscosité Mooney

Pour les polymères et les compositions de caoutchouc, les viscosités Mooney $ML_{(1+4)}$100 °C sont mesurées selon la norme ASTM D-1646.

Un consistomètre oscillant est utilisé tel que décrit dans la norme ASTM D-1646. La mesure de plasticité Mooney se fait selon le principe suivant : l'élastomère ou la composition à l'état cru (i.e. avant cuisson) est moulé(e) dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney $ML_{(1+4)}$ est exprimée en "unité Mooney" (UM, avec 1 UM = 0,83 N.m).

La différence entre la viscosité Mooney de la composition et la viscosité Mooney de l'élastomère permet de mesurer la processabilité ou mise en oeuvre à cru. Plus cette différence est faible, meilleure est la mise en oeuvre à cru.

Calorimétrie différentielle

Les températures de transition vitreuse (Tg) des élastomères sont déterminées à l'aide d'un calorimètre différentiel ("differential scanning calorimeter").

Spectroscopie proche infrarouge (NIR)

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 $\mu$m d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

Viscosité inhérente

La viscosité inhérente des élastomères à 25 °C est déterminée à partir d'une solution d'élastomère à 0,1 $g.dL^{-1}$ dans le toluène, selon le principe suivant :
La viscosité inhérente est déterminée par la mesure du temps d'écoulement t de la solution de polymère et du temps d'écoulement $t_o$ du toluène, dans un tube capillaire.

Dans un tube Ubbelhode (diamètre du capillaire 0,46 mm, capacité 18 à 22 mL), placé dans un bain thermostaté à 25 $\pm$ 0,1 °C, le temps d'écoulement du toluène et celui de la solution polymère à 0,1 $g.dL^{-1}$ sont mesurés.

La viscosité inhérente est obtenue par la relation suivante :

$$\eta_{inh} = \frac{1}{C}\ln\left[\frac{(t)}{(t_o)}\right]$$

avec :

- C : concentration de la solution de polymère dans le toluène en $g.dL^{-1}$,
- $t$ : temps d'écoulement de la solution de polymère dans le toluène en seconde,
- $t_o$ : temps d'écoulement du toluène en seconde,
- $\eta_{inh}$ : viscosité inhérente exprimée en $dL.g^{-1}$.

Cold-Flow ($CF_{(1+6)}$100°C)

Il s'agit de mesurer la masse d'élastomère extrudée à travers une filière calibrée pendant un temps donné (6 heures) et dans des conditions fixées (T = 100 °C). La filière a un diamètre de 6,35 mm, une épaisseur de 0,5 mm et est située au fond et au centre d'une coupe cylindrique évidée de 52 mm de diamètre.

Dans ce dispositif sont placés 40 $\pm$ 4 g d'élastomère préalablement mis sous forme de pastille (2 cm d'épaisseur et 52 mm de diamètre). Sur la pastille d'élastomère est positionné un piston calibré de 1 kg ($\pm$ 5 g). L'ensemble est ensuite placé dans une étuve à 100 $\pm$ 0,5 °C.

Les conditions n'étant pas stabilisées lors de la première heure dans l'étuve, le produit extrudé à t = 1 heure est découpé puis jeté.

La mesure est ensuite poursuivie pendant 6 heures $\pm$ 5 mn, durant lesquelles le produit est laissé dans l'étuve. A l'issue des 6 heures, l'échantillon de produit extrudé est découpé puis pesé. Le résultat de la mesure est la masse d'élastomère pesée. Plus ce résultat est faible, plus l'élastomère résiste au fluage à froid.

Détermination de la répartition des espèces d'un élastomère modifié.

La méthode employée est une méthode par modélisation déjà exposée dans la demande de brevet WO 2015/018599 A1 au nom des Demanderesses et décrite ci-après.

1. Exemple de détermination du rapport de constantes cinétiques (K) du modèle cinétique de fonctionnalisation en réacteur agité discontinu

Détermination expérimentale du pourcentage massique des chaînes fonctionnalisées en extrémité de chaîne, en milieu de chaîne et étoilées (3 branches) et du saut de viscosité en fonction du rapport molaire 3-(N,N-diméthylaminopropyl)triméthoxysilane/n-BuLi

Dans onze bouteilles en verre (bouteilles steinie) de 250 mL sont introduits 91,6 mL (70,5 g) de méthylcyclohexane, 14,8 mL (9,65 g) de butadiène et 0,49 mL d'une solution de tetrahydrofurfuryl éther dans le méthylcyclohexane à 0,078 mol.L-1. Après neutralisation des impuretés dans la solution à polymériser par addition de n-Butyllithium (n-BuLi), 1,90 mL de n-BuLi à 0,097 mol.L-1 dans le méthylcyclohexane sont ajoutés. La polymérisation est conduite à 60 °C.

Après 15 minutes, le taux de conversion en monomère atteint 95 %. Ce taux est déterminé par pesée d'un extrait séché à 140 °C, sous la pression réduite de 200 mmHg. Une bouteille témoin (bouteille n°1) est stoppée avec un excès de méthanol par rapport au lithium. La viscosité inhérente "initiale" est de 0,66 dL.g-1. 0,88 mL d'une solution de 3-(N,N-diméthylaminopropyl)triméthoxysilane à 0,1 mol.L-1 dans le méthylcyclohexane sont ajoutés aux solutions de polymère vivant (0,48 éq. molaire vs Li) contenues dans les bouteilles 2 à 9, 0,73 mL de cette même solution sont ajoutés dans la bouteille 10 (0,40 éq. molaire vs Li) et 1,83 mL de cette même solution sont ajoutés dans la bouteille 11 (1,0 éq. molaire vs Li). Après 15 minutes de réaction à 60 °C, les solutions sont antioxydées par addition de 0,4 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Les polymères ainsi traités sont séparés de leur solution par séchage à 60 °C sous pression réduite et courant d'azote pendant 12 heures.

Les viscosités inhérentes "finales", les sauts de viscosité définis comme les rapports des viscosités inhérentes "finales" sur la viscosité inhérente "initiale" ainsi que les pourcentages massiques des chaînes désactivées (P), des chaînes fonctionnalisées en extrémité de chaîne (PA), en milieu de chaîne (P2A) et étoilées (P3A) sont présentées dans le Tableau 1 ci-dessous.

Tableau 1 - Evolution de la répartition des espèces P+PA/P2A/P3A et du saut de viscosité en fonction du rapport molaire 3-(N,N-diméthylaminopropyl)triméthoxysilane/n-BuLi.

| Bouteille | Rapport molaire 3-(N,N-diméthylaminopropyl)triméthoxysil ane/Li | Saut de viscosité | P+PA/P2A/P3A (wt. %) |
|---|---|---|---|
| 2 | 0,48 | | 12/77/10 |
| 3 | 0,48 | | 13/77/9 |
| 4 | 0,48 | | 13/78/9 |
| 5 | 0,48 | | 13/82/5 |
| 6 | 0,48 | | 13/83/5 |
| 7 | 0,48 | | 13/83/4 |
| 8 | 0,48 | | 14/83/4 |
| 9 | 0,48 | 1,54 | 11/84/4 |
| 10 | 0,40 | 1,61 | 15/53/25 |
| 11 | 1,00 | 1,09 | 72/20/7 |

L'élastomère diénique vivant est fonctionnalisé selon le mécanisme réactionnel :

| Réaction | Mécanisme |
|---|---|
| R1 | $PLi + A \xrightarrow{k_1} PA$ |
| R2 | $PLi + PA \xrightarrow{k_2} P_2A$ |

(suite)

| Réaction | Mécanisme |
| --- | --- |
| R3 | $PLi + P_2A \xrightarrow{k_3} P_3A$ |

Où
- A représente l'agent de fonctionnalisation,
- PLi représente une chaîne élastomère vivante,
- PA représente l'élastomère fonctionnalisé en bout de chaîne,
- P2A représente l'élastomère couplé,
- P3A représente l'élastomère étoilé à trois branches, et
- ki représente la constante cinétique de la réaction Ri, s'effectuant selon la loi de vitesse suivante :

| Réactions | Vitesse de réaction |
| --- | --- |
| R1 | $V_1 = k_1\ [PLi][A]$ |
| R2 | $V_2 = k_2[PLi][PA]$ |
| R3 | $V_3 = k_3[PLi][P_2A]$ |

où
- k1, k2 et k3 sont les constantes cinétiques respectivement des réactions R1, R2 et R3 (exprimées en $(m^3/mol).s^{-1}$),
- [PLi] est la concentration de chaînes vivantes (exprimée en $mol/m^3$),
- [A] est la concentration en agent de modification A (exprimée en $mol/m^3$),
- [PA] est la concentration en élastomère fonctionnalisé en bout de chaîne (exprimée en $mol/m^3$),
- [P2A] est la concentration en élastomère couplé (exprimée en $mol/m^3$),
- [P3A] est la concentration en élastomère étoilé à trois branches (exprimée en $mol/m^3$),
- le rapport K des constantes cinétiques défini comme:

$$K = \frac{k_1}{k_2} = \frac{k_2}{k_3}$$

étant supérieur à 1.

Le modèle cinétique de fonctionnalisation intégré, selon l'homme d'art, à un modèle de réacteur parfaitement agité discontinu (bibliographie : Villermeaux, J; Génie de la réaction chimique; 1993) permet de déterminer la répartition des différentes espèces. De plus, les chaînes peuvent être désactivées (P) lors de l'étape de polymérisation ou/et fonctionnalisation. Ainsi, le produit final est un mélange d'élastomère désactivé (P), élastomère fonctionnalisé bout de chaîne (PA), élastomère fonctionnalisé milieu de chaîne (P2A) et élastomère étoilé (P3A).

Pour les points expérimentaux du Tableau 1 ci-dessus, nous avons estimé la valeur de $K=10^{2\pm1}$ selon la description du modèle de réacteur parfaitement agité discontinu, qui représente le réacteur utilisé pour ces expériences.

La Figure 1 représente la répartition des espèces P, PA, P2A et P3A en fonction du rapport molaire agent de fonctionnalisation/chaînes polymère vivantes (PLi) : simulé (lignes) et mesuré (points).

2. Exemple de détermination de la cinétique de fonctionnalisation en réacteur agité discontinu

Détermination expérimentale du pourcentage massique des chaînes fonctionnalisées en extrémité de chaîne, en milieu de chaîne et étoilées (3 branches) en fonction du temps de couplage avec le 3-(N,N-diméthylaminopropyl)triméthoxysilane (~ 0,5 éq. mol vs Li)

Dans vingt-deux bouteilles en verre (bouteilles steinie) de 250 mL sont introduits 91,6 mL (70,5 g) de méthylcyclohexane, 14,8 mL (9,65 g) de butadiène et 0,49 mL d'une solution de tetrahydrofurfuryl éther dans le méthylcyclohexane à 0,078 $mol.L^{-1}$. Après neutralisation des impuretés dans la solution à polymériser par addition de n-Butyllithium (n-BuLi), 1,90 mL de n-BuLi à 0,097 mol.L-1 dans le méthylcyclohexane sont ajoutés. La polymérisation est conduite à 60 °C.

Après 15 minutes, le taux de conversion en monomère atteint 95 %. Ce taux est déterminé par pesée d'un

extrait séché à 140 °C, sous la pression réduite de 200 mmHg. 0,88 mL d'une solution de 3-(N,N-diméthylaminopropyl)triméthoxysilane à 0,1 mol.$L^{-1}$ dans le méthylcyclohexane sont ajoutés aux solutions de polymère vivant (0,48 éq. molaire vs Li) contenues dans les vingt et une bouteilles restantes. Après 10 secondes (bouteilles 12, 13 et 14), 15 secondes (bouteilles 15, 16 et 17), 20 secondes (bouteilles 18, 19 et 20), 30 secondes (bouteilles 21 et 22), 2 minutes (bouteille 23) et 15 minutes (bouteilles 24, 25, 26, 27, 28, 29, 30, 31 et 32) de réaction à 60 °C, les solutions sont antioxydées par addition de 0,4 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Les polymères ainsi traités sont séparés de leur solution par séchage à 60 °C sous pression réduite et courant d'azote pendant 12 heures.

Les pourcentages massiques des chaînes désactivées (P), des chaînes fonctionnalisées en extrémité de chaîne (PA), en milieu de chaîne (P2A) et étoilées (P3A) sont présentées dans le Tableau 2 ci-dessous.

Tableau 2 - Evolution de la répartition des espèces P+PA/P2A/P3A en fonction du temps de réaction avec le 3-(N, N-diméthylaminopropyl)triméthoxysilane.

| Bouteille | Temps de réaction avec le 3-(N,N-diméthylaminopropyl)-triméthoxysilane | P+PA (wt.%) | $P_2A$ (wt.%) | $P_3A$ (wt.%) |
|---|---|---|---|---|
| 12 | 10 s | 23 | 76 | 1 |
| 13 | 10 s | 23 | 76 | 1 |
| 14 | 10 s | 22 | 77 | 1 |
| 15 | 15 s | 19 | 79 | 1 |
| 16 | 15 s | 20 | 79 | 1 |
| 17 | 15 s | 19 | 79 | 1 |
| 18 | 20 s | 18 | 81 | 1 |
| 19 | 20 s | 17 | 81 | 1 |
| 20 | 20 s | 18 | 81 | 1 |
| 21 | 30 s | 16 | 82 | 2 |
| 22 | 30 s | 14 | 83 | 2 |
| 23 | 2 min | 11 | 86 | 2 |
| 24 | 15 min | 12 | 77 | 10 |
| 25 | 15 min | 13 | 77 | 9 |
| 26 | 15 min | 13 | 78 | 9 |
| 27 | 15 min | 13 | 82 | 5 |
| 28 | 15 min | 13 | 83 | 4 |
| 29 | 15 min | 13 | 83 | 4 |
| 30 | 15 min | 14 | 83 | 4 |
| 31 | 15 min | 11 | 84 | 4 |
| 32 | 15 min | 9 | 88 | 3 |

En utilisant le même modèle cinétique de l'exemple précèdent et la valeur de $K=10^{2\pm1}$, la valeur de k1[PLi], dans le modèle cinétique, est estimée à $10^{4\pm0,2}$. La Figure 2 compare les rendements simulés aux rendements mesurés en fonction du temps de réaction en réacteur discontinu parfaitement agité.

3. Exemple de détermination du rapport de constantes cinétiques (K) de fonctionnalisation en configuration continue

Dans une installation pilote de polymérisation continue, à la sortie du réacteur agité de polymérisation continu, supposé parfaitement agité, une quantité variable d'agent de fonctionnalisation est injectée afin de caractériser la section de fonctionnalisation continue. La section de fonctionnalisation est composée d'un mélangeur statique type kenics à 36

éléments de 4 L et d'un réacteur continu agité de volume 32,5 L, supposé parfaitement agité. Le temps de séjour minimal dans les réacteurs agités est de 20 minutes.

Dans un réacteur agité continu de 32,5 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 2,85 $kg.h^{-1}$, débit massique styrène = 1,25 $kg.h^{-1}$, concentration massique en monomère = 11 wt.%, 60 ppm tétrahydrofurfuryl éthyle éther. Du n-butyllithium (n-BuLi) est introduit en quantité suffisante afin de neutraliser les impuretés protiques apportées par les différents constituants présents dans l'entrée de ligne. À l'entrée du réacteur, 850 $\mu$mol de n-BuLi pour 100 g de monomères sont introduits.

Les différents débits sont calculés afin que le temps de séjour moyen dans le réacteur soit de 40 min. La température est maintenue à 90 °C.

Le taux de conversion, mesuré sur un prélèvement réalisé en sortie de réacteur, est de 92,6 %.

En sortie de réacteur de polymérisation, du 3-(N,N-diméthylaminopropyl)triméthoxysilane en solution dans le méthylcyclohexane est ajouté à la solution de polymère vivant en différentes quantités (différents rapports molaires 3-(N,N-diméthylaminopropyl)triméthoxysilane / PLi) pour caractériser le procédé de fonctionnalisation. Cette solution est mélangée dans un mélangeur statique constitué de 36 éléments de mélangeage de type Kenics KMR puis traverse un tube vide, le temps de séjour total en tube étant de 3 minutes (mélangeur statique + tube vide), et un réacteur agité continu de 32,5 L, supposé parfaitement agité selon l'homme de l'art, de 40 minutes de temps de séjour. Les polymères sont ensuite soumis à un traitement anti-oxydant avec ajout de 0,4 pce de 2,2'-méthylène-bis(4-méthyl-6-tertiobutylphénol) et 0,2 pce de N-(1,3-diméthylbutyl)-N'-phényl-p-phénylènediamine.

Les polymères ainsi traités sont séparés de leur solution par une opération de stripping à la vapeur d'eau, puis séchés sur un outil à cylindres à 100 °C.

Les sauts de viscosité inhérente (SV) mesurés pour les élastomères d'Ip de l'ordre de 2 sont présentés sur la Figure 3.

Le modèle cinétique de fonctionnalisation décrit ci-dessus est intégré, selon l'homme d'art, à un modèle de réacteur tubulaire (représentatif du mélangeur statique Kenics) suivi d'un réacteur parfaitement agité continu (représentatif du réacteur agité de fonctionnalisation) (bibliographie : Villermeaux, J; Génie de la réaction chimique; 1993) et permet de déterminer la répartition d'espèces PLi, P, PA, P2A et P3A.

Pour faire le lien entre la répartition des espèces PLi, P, PA, P2A et P3A calculée par le modèle cinétique de fonctionnalisation et le rapport expérimental de viscosités inhérentes avant et après fonctionnalisation (SV), le SV est calculé de manière théorique par l'équation ci-dessous :

$$SV = \left( \frac{\sum_{i=1}^{n} w_{PiA} \overline{M}^{a}_{w,P_iA} g'_i}{\overline{M}^{a}_{w,P}} \right)$$

Où,

wPiA est la fraction massique des espèces PiA, PLi, P ;
Mw est la masse moléculaire moyenne en poids ;
a est le paramètre de l'équation MHS (Mark Houwink Sakurada) et égal à 0,75
gi' est une correction pour les polymères étoilés, par exemple :

$$g_i' = \left( \frac{3i-2}{i^2} \right)^b$$

Où,
b est égal à 0,58 (Livre : Structure and Rheology of Molten Polymers)

En supposant que le temps de séjour est assez long pour être considéré comme infini, on estime le rapport de constantes cinétiques K par minimisation des écarts de SV expérimental et calculé. La valeur de K est de $10^{1\pm1}$ comme représenté sur la Figure 3.

La Figure 3 représente également le SV calculé pour des élastomères présentant un Ip de l'ordre de 1,5.

Le SV calculé est déterminé à partir de la répartition d'espèces calculée par le modèle cinétique intégré aux

modèles de réacteurs tubulaire et parfaitement agité continu (Figure 4).

Propriétés dynamiques

Les propriétés dynamiques, et en particulier tan δ max, sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10Hz, dans les conditions normales de température (40°C) selon la norme ASTM D 1349-99. On effectue un balayage en amplitude de déformation de 0,1% à 50% crête-crête (cycle aller), puis de 50% à 0,1% crête-crête (cycle retour). Le résultat plus particulièrement exploité est le facteur de perte tan δ. Pour le cycle retour, on indique la valeur maximale de tan δ observée, noté tan δ max. Cette valeur est représentative de l'hystérèse du matériau et dans le cas présent de la résistance au roulement : plus la valeur de tan δ max est faible, plus la résistance au roulement est basse. Dans les exemples, les résultats des propriétés dynamiques sont donnés en base 100. Plus ce nombre exprimé en base 100 est élevé, plus l'hystérèse est faible.

Préparation des polymères

**Préparation du polymère A** : SBR fonctionnel aminoalcoxysilane en milieu de chaîne selon l'invention

Dans 2 réacteurs alimentés de 14 L disposés en série, supposés parfaitement agités selon l'homme de l'art, sont introduits en continu du méthylcyclohexane, du butadiène, du styrène et du tétrahydrofurfuryl éthyle éther, selon les proportions suivantes : débit massique butadiène = 1,756 kg.h-1 (dont 1,231 $kg.h^{-1}$ sont injectés en entrée en entrée du premier réacteur et 0,525 $kg.h^{-1}$ sont injectés entre le premier et le deuxième réacteur après avoir été épuré sur colonnes d'alumines), débit massique styrène = 0,906 $kg.h^{-1}$, concentration massique totale en monomère dans le deuxième réacteur = 12,5 wt.%, débit massique de tétrahydrofurfuryl éthyle éther = 134 $g.h^{-1}$.

Du n-butyllithium (n-BuLi) est introduit en quantité suffisante afin de neutraliser les impuretés protiques apportées par les différents constituants présents dans l'entrée du premier réacteur A l'entrée du premier réacteur, 720 μmol de n-BuLi pour 100 g de monomère sont introduits.

Les différents débits sont calculés afin que le temps de séjour moyen dans le dernier réacteur soit de 30 min. Les 2 réacteurs en série sont respectivement maintenus aux températures suivantes : 58°C pour le premier et 85°C pour le second.

A la sortie du deuxième réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 1,42 $dL.g^{-1}$. La masse molaire moyenne en nombre, Mn, déterminée par la technique de SEC, est de 97000 $g.mol^{-1}$ et l'indice de polymolécularité, Ip, est de 1,50.

En sortie du deuxième réacteur de polymérisation, 385 μmol pour 100 g de monomère de 3-(N,N-diméthylaminopropyl)triméthoxysilane (Agent de couplage et d'étoilage AdC) en solution dans le méthylcyclohexane sont ajoutés à la solution de polymère vivant (AdC/Li = 0,53). Cette solution est mélangée dans un mélangeur statique constitué de 36 éléments de mélangeage de type Kenics KMR et dans un réacteur agité continu de 14L, supposé parfaitement agité par l'homme de l'art, de 30 minutes de temps de séjour.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 1,91 $dL.g^{-1}$. Le saut de viscosité, défini comme le rapport de ladite viscosité "finale" sur ladite viscosité "initiale", est ici de 1,34.

La viscosité Mooney de ce polymère A est de 70.

La masse molaire moyenne en nombre, Mn, déterminée par la technique de SEC, est de 165 000 $g.mol^{-1}$ et l'indice de polymolécularité, Ip, est de 1,45.

La microstructure de ce polymère est déterminée par la méthode NIR. Le taux de motifs 1,2 est de 23,1 % par rapport aux unités butadiène. Le taux massique de styrène est de 27,7 %.

La température de transition vitreuse de ce polymère est de - 49 °C.

Le cold-flow CF(1+6)100°C du polymère est de 2,1.

La répartition des espèces après fonctionnalisation est donnée avec la méthode de modélisation décrite ci-dessus : 87% de chaînes fonctionnelles dont 77% sont fonctionnelles en milieu de chaîne et 13% de chaînes étoilées.

**Préparation du polymère B** : SBR fonctionnel aminoalcoxysilane en milieu de chaîne - comparatif

Dans un réacteur alimenté en continu agité de 14 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 1,22 $kg.h^{-1}$, débit massique styrène = 0,536 $kg.h^{-1}$, concentration massique en monomère = 11 wt.%, 60 ppm tétrahydrofurfuryl éthyle éther. Du n-butyllithium (n-BuLi) est introduit en quantité suffisante afin de neutraliser les impuretés protiques apportées par les différents constituants présents dans l'entrée du premier réacteur A l'entrée du réacteur, 929 $\mu$mol de n-BuLi pour 100 g de monomère sont introduits.

Les différents débits sont calculés afin que le temps de séjour moyen dans le réacteur soit de 40 min. La température est maintenue à 90 °C.

A la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 1,42 $dL.g^{-1}$. La masse molaire moyenne en nombre, $M_n$, déterminée par la technique de SEC, est de 80 000 $g.mol^{-1}$ et l'indice de polymolécularité, Ip, est de 1,90 (ce qui ne satisfait pas à la définition des élastomères diéniques modifiés selon l'invention).

En sortie du réacteur de polymérisation, 474 $\mu$mol pour 100 g de monomère de 3-(N,N-diméthylaminopropyl)triméthoxysilane (Agent de couplage et d'étoilage AdC) en solution dans le méthylcyclohexane sont ajoutés à la solution de polymère vivant (AdC/Li = 0,51). Cette solution est mélangée dans un mélangeur statique constitué de 36 éléments de mélangeage de type Kenics KMR et dans un réacteur agité continu de 14L, supposé parfaitement agité par l'homme de l'art, de 40 minutes de temps de séjour.

Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 1,90 $dL.g^{-1}$. Le saut de viscosité, défini comme le rapport de ladite viscosité "finale" sur ladite viscosité "initiale", est ici de 1,30.

La viscosité Mooney de ce polymère B est de 56.

La masse molaire moyenne en nombre, $M_n$, déterminée par la technique de SEC, est de 135 000 $g.mol^{-1}$ et l'indice de polymolécularité, Ip, est de 1,72.

La microstructure de ce polymère est déterminée par la méthode NIR. Le taux de motifs 1,2 est de 24,5 % par rapport aux unités butadiène. Le taux massique de styrène est de 27,5 %.

La température de transition vitreuse de ce polymère est de -47 °C.

Le cold-flow $CF_{(1+6)}$100°C du polymère est de 1,6.

La répartition des espèces après fonctionnalisation est donnée avec la méthode de modélisation décrite ci-dessus : 84% de chaînes fonctionnelles dont 77% sont fonctionnelles en milieu de chaîne et 16% de chaînes étoilées.

**Préparation du polymère C** : SBR fonctionnel aminoalcoxysilane en milieu de chaîne - comparatif

Dans 2 réacteurs alimentés en continu de 14 L agités disposés en série, supposés parfaitement agités selon l'homme de l'art, sont introduits en continu du méthylcyclohexane, du butadiène, du styrène et du tétrahydrofurfuryl éthyle éther, selon les proportions suivantes : débit massique butadiène = 1,756 $kg.h^{-1}$ (dont 1,231 $kg.h^{-1}$ sont injectés en entrée du premier réacteur 0,525 $kg.h^{-1}$ sont injectés entre le premier et le deuxième réacteur après avoir été épuré sur colonnes d'alumines), débit massique styrène = 0,906 $kg.h^{-1}$, concentration massique totale en monomère dans le deuxième réacteur = 12,5 wt.%, débit massique de tétrahydrofurfuryl éthyle éther = 134 g/h.

Du n-butyllithium (n-BuLi) est introduit en quantité suffisante afin de neutraliser les impuretés protiques apportées par les différents constituants présents en entrée du premier réacteur. A l'entrée du premier réacteur, 555 $\mu$mol de n-BuLi pour 100 g de monomère sont introduits.

Les différents débits sont calculés afin que le temps de séjour moyen dans le dernier réacteur soit de 30 min. Les 2 réacteurs en série sont respectivement maintenus aux températures suivantes : 58°C pour le premier et 85°C pour le second.

A la sortie du deuxième réacteur de polymérisation, un prélèvement de solution de polymère est effectué. Le polymère ainsi obtenu est ensuite soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C. La viscosité inhérente "initiale" mesurée est de 1,69 $dL.g^{-1}$. La masse molaire moyenne en nombre, Mn, déterminée par la technique de SEC, est de 133000 $g.mol^{-1}$ et l'indice de polymolécularité, Ip, est de 1,45.

En sortie de réacteur de polymérisation, 305 µmol pour 100 g de monomère de 3-(N,N-diméthylaminopropyl)triméthoxysilane (Agent de couplage et d'étoilage AdC) en solution dans le méthylcyclohexane sont ajoutés à la solution de polymère vivant (AdC/Li = 0,55). Cette solution est mélangée dans un mélangeur statique constitué de 36 éléments de mélangeage de type Kenics KMR et dans un réacteur agité continu de 14L, supposé parfaitement agité par l'homme de l'art, de 30 minutes de temps de séjour.

Le polymère ainsi obtenu est ensuite soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est ensuite séparé de sa solution par une opération de stripping à la vapeur d'eau, puis séché sur un outil à cylindres à 100 °C.

La viscosité inhérente "finale" mesurée est de 2,23 $dL.g^{-1}$. Le saut de viscosité, défini comme le rapport de ladite viscosité "finale" sur ladite viscosité "initiale", est ici de 1,32.

La viscosité Mooney de ce polymère C est de 118 (ce qui ne répond pas à la définition de l'invention).

La masse molaire moyenne en nombre, Mn, déterminée par la technique de SEC, est de 224 700 $g.mol^{-1}$ et l'indice de polymolécularité, Ip, est de 1,40.

La microstructure de ce polymère est déterminée par la méthode NIR. Le taux de motifs 1,2 est de 23,4 % par rapport aux unités butadiène. Le taux massique de styrène est de 27,7 %.

La température de transition vitreuse de ce polymère est de - 48 °C.

Le cold-flow CF(1+6)100°C du polymère est de 0,26.

La répartition des espèces après fonctionnalisation est donnée avec la méthode de modélisation décrite ci-dessus : 90% de chaînes fonctionnelles dont 76% sont fonctionnelles en milieu de chaîne et 10% de chaînes étoilées.

Exemples comparatifs de compositions de caoutchouc

On compare trois compositions reportées dans le tableau 3 ci-après. La composition 1 est conforme à l'invention. Les compositions 2 et 3 sont des compositions comparatives non-conformes à l'invention.

Les formulations sont exprimées en pourcentage en poids pour 100 parties en poids d'élastomère (pce).

Tableau 3

| | Exemple | Exemples comparatifs | |
|---|---|---|---|
| Composition | 1 | 2 | 3 |
| Polymère A | 100 | | |
| Polymère B | | 100 | |
| Polymère C | | | 100 |
| Silice (1) | 80 | 80 | 80 |
| N234 | 3 | 3 | 3 |
| Résine Tg = 52°C | 40 | 40 | 40 |
| Agent de couplage (2) | 6,4 | 6,4 | 6,4 |
| ZnO | 0,9 | 0,9 | 0,9 |
| Acide stéarique | 3 | 3 | 3 |
| Anti-oxydant (3) | 2,2 | 2,2 | 2,2 |
| Diphénylguanidine | 1,6 | 1,6 | 1,6 |
| Soufre | 1 | 1 | 1 |
| Sulfénamide (4) | 2,3 | 2,3 | 2,3 |

(1) Silice "Zeosil 1165MP" de Rhodia.
(2) "Si69" de Degussa.
(3) N-(1,3-diméthylbutyl)-N'-phényl-p-phénylènediamine.
(4) N-cyclohexyl-2-benzothiazylsulphenamide.

Pour les essais qui suivent, on procède de la manière suivante :
Chacune des compositions est réalisée, dans un premier temps, par un travail thermo-mécanique, puis, dans un second

temps de finition, par un travail mécanique.

On introduit dans un mélangeur interne de laboratoire de type « Banbury », dont la capacité est de 400 $cm^3$, qui est rempli à 72% et dont la température initiale est de 90°C, l'élastomère, deux tiers de la silice, l'agent de couplage, la diphénylguanidine et le noir de carbone.

Le travail thermo-mécanique est réalisé au moyen de palettes dont la vitesse moyenne est de 50 tr/min et dont la température est de 90°C.

Après une minute, on introduit le dernier tiers de silice, l'antioxydant, l'acide stéarique et la cire anti-ozone, l'huile MES et la résine, toujours sous travail thermo-mécanique.

Après deux minutes, on introduit l'oxyde de zinc, la vitesse des palettes étant de 50 tr/min.

Le travail thermo-mécanique est encore conduit pendant deux minutes, jusqu'à une température maximale de tombée de 160°C environ.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Les résultats sont présentés dans le tableau 4.

Tableau 4

| Résultats caoutchouterie (Tan δ max 40°C, $ML_{(1+4)}$100°C composition, Cold-Flow) : | | | |
|---|---|---|---|
| | Exemple | Exemples comparatifs | |
| Composition | 1 | 2 | 3 |
| Polymère | A | B | C |
| $ML_{(1+4)}$ 100°C élastomère | 70 | 56 | 118 |
| Tan 8 max 40°C | 100 | 101 | 100 |
| $ML_{(1+4)}$ 100°C composition | 80 | 75 | NM* |
| $ML_{(1+4)}$100°C composition - $ML_{(1+4)}$100°C élastomère | 10 | 19 | - |
| Cold-Flow (g/6h) | 2,10 | 1,66 | 0,26 |
| * Valeur non mesurable car trop élevée. | | | |

Les résultats présentés dans le tableau 4 montrent une hystérèse équivalente entre la composition 1 selon l'invention par rapport à celle de la composition témoin 2 (polymère B à indice de polymolécularité avant fonctionnalisation et étoilage élevé) et à celle de la composition témoin 3 (polymère C à forte viscosité Mooney).

La processabilité de la composition 1 selon l'invention, qui est donnée par différence entre la viscosité Mooney de la composition et la viscosité Mooney de l'élastomère, est significativement meilleure que celle des compositions témoin 2 et 3.

Enfin, la résistance au fluage de la composition 1 est comparable à celle de la composition témoin 2. Ainsi, les résultats présentés dans le Tableau 4 mettent en évidence une amélioration du compromis hystérèse / mise en oeuvre à cru de la composition contenant le polymère selon l'invention tout en maintenant la résistance au fluage de l'élastomère.

## Revendications

**1.** Elastomère diénique modifié comprenant :

a) au moins 70% en poids, par rapport au poids total de l'élastomère diénique modifié, d'un élastomère diénique linéaire fonctionnalisé majoritairement en milieu de chaîne par un groupe alcoxysilane, éventuellement partiellement ou totalement hydrolysé en silanol, le groupe alcoxysilane étant éventuellement porteur d'une autre fonction susceptible d'interagir avec une charge renforçante, le groupe alcoxysilane étant lié aux deux branches de l'élastomère diénique par l'intermédiaire de l'atome de silicium, ledit élastomère diénique fonctionnalisé

présentant un indice de polymolécularité avant fonctionnalisation inférieur ou égal à 1,6,
b) plus de 0 et jusqu'à 30% en poids, par rapport au poids total de l'élastomère diénique modifié, d'un élastomère diénique étoilé et présentant un indice de polymolécularité avant étoilage inférieur ou égal à 1,6,

la viscosité Mooney dudit élastomère diénique modifié variant de 30 à 80.

**2.** Elastomère diénique modifié selon la revendication 1, caractérisé en ce l'autre fonction susceptible d'interagir avec une charge renforçante de l'élastomère diénique a) est une fonction choisie parmi les amines primaires, secondaires ou tertiaires, cycliques ou non, les isocyanates, les imines, les cyano, les thiols, les carboxylates, les époxydes et les phosphines primaires, secondaires ou tertiaires.

**3.** Elastomère selon l'une quelconque des revendications précédentes, **caractérisé en ce que** la fonction susceptible d'interagir avec une charge renforçante de l'élastomère diénique a) est une fonction amine tertiaire, de préférence diéthylamine ou diméthylamine.

**4.** Elastomère selon l'une quelconque des revendications précédentes, **caractérisé en ce que** la fonction susceptible d'interagir avec une charge renforçante de l'élastomère diénique a) et l'atome de silicium lié à l'élastomère sont reliés entre eux par un groupement espaceur défini comme étant un radical hydrocarboné divalent, linéaire ou ramifié, aliphatique en $C_1$-$C_{18}$, saturé ou non, cyclique ou non, ou un radical hydrocarboné divalent aromatique en $C_6$-$C_{18}$, ledit groupement espaceur contenant éventuellement un ou plusieurs radicaux aromatiques et/ou un ou plusieurs hétéroatomes.

**5.** Elastomère selon l'une quelconque des revendications précédentes, **caractérisé en ce que** le groupe alcoxysilane est un groupe méthoxysilane ou éthoxysilane, éventuellement partiellement ou totalement hydrolysé en silanol.

**6.** Elastomère diénique modifié selon l'une quelconque des revendications 1 à **5**, **caractérisé en ce qu'**il comprend au moins 80% en poids, par rapport au poids total de l'élastomère diénique modifié, de l'élastomère diénique linéaire fonctionnalisé majoritairement en milieu de chaîne a).

**7.** Elastomère diénique modifié selon l'une quelconque des revendications 1 à **6**, **caractérisé en ce qu'**il comprend au plus 20% en poids, par rapport au poids total de l'élastomère diénique modifié, de l'élastomère diénique étoilé b).

**8.** Elastomère selon l'une quelconque des revendications précédentes, **caractérisé en ce que** l'élastomère diénique étoilé est un élastomère étoilé à base d'étain ou de silicium.

**9.** Elastomère diénique modifié selon l'une quelconque des revendications précédentes, **caractérisé en ce que** l'élastomère diénique étoilé b) est un élastomère diénique étoilé à trois ou quatre branches.

**10.** Elastomère diénique modifié selon l'une quelconque des revendications précédentes **caractérisé en ce que** les élastomères diéniques a) et b) ont avant fonctionnalisation et étoilage la même microstructure et la même macrostructure.

**11.** Composition de caoutchouc renforcée à base d'au moins une charge renforçante et d'une matrice élastomère comprenant au moins un élastomère diénique modifié tel que défini à l'une quelconque des revendications 1 à **10.**

**12.** Composition selon la revendication **11**, **caractérisée en ce que** la ou les charges renforçantes comprennent plus de 50% en poids, par rapport au poids total de la ou des charges renforçantes, de charge inorganique renforçante.

**13.** Article semi-fini en caoutchouc pour pneumatique, **caractérisé en ce qu'**il comprend une composition de caoutchouc réticulable ou réticulée selon l'une quelconque des revendications **11** à **12.**

**14.** Article semi-fini selon la revendication **13, caractérisé en ce que** ledit article est une bande de roulement.

**15.** Pneumatique, **caractérisé en ce qu'**il comporte un article semi-fini tel que défini dans la revendication **14.**

**Patentansprüche**

1. Modifiziertes Dienelastomer, umfassend:

   a) mindestens 70 Gew.-%, bezogen auf das Gesamtgewicht des modifizierten Dienelastomers, eines geraden Dienelastomers, das größtenteils mittelständig mit einer Alkoxysilangruppe funktionalisiert ist, die gegebenenfalls partiell oder vollständig zu Silanol hydrolysiert ist, wobei die Alkoxysilangruppe gegebenenfalls eine andere Funktion trägt, die mit einem verstärkenden Füllstoff wechselwirken kann, wobei die Alkoxysilangruppe über das Siliziumatom an die beiden Zweige des Dienelastomers gebunden ist, wobei das funktionalisierte Dienelastomer vor der Funktionalisierung einen Polydispersitätsindex von weniger als oder gleich 1,6 aufweist,
   b) mehr als 0 und bis zu 30 Gew.-%, bezogen auf das Gesamtgewicht des modifizierten Dienelastomers, eines sternförmigen Dienelastomers, das vor der Sternbildung einen Polydispersitätsindex von weniger als oder gleich 1,6 aufweist,

   wobei die Mooney-Viskosität des modifizierten Dienelastomers von 30 bis 80 variiert.

2. Modifiziertes Dienelastomer nach Anspruch 1, **dadurch gekennzeichnet, dass** die andere Funktion, die mit einem verstärkenden Füllstoff wechselwirken kann, des Dienelastomers a) eine Funktion ist, die aus primären, sekundären oder tertiären, cyclischen oder nicht cyclischen Aminen, Isocyanaten, Iminen, Cyanofunktionen, Thiolen, Carboxylaten, Epoxiden und primären, sekundären oder tertiären Phosphinen ausgewählt wird.

3. Elastomer nach einem der vorhergehenden Ansprüche, **dadurch gekennzeichnet, dass** die Funktion, die mit einem verstärkenden Füllstoff wechselwirken kann, des Dienelastomers a) eine tertiäre Aminfunktion, vorzugsweise Diethylamin- oder Dimethylamin, ist.

4. Elastomer nach einem der vorhergehenden Ansprüche, **dadurch gekennzeichnet, dass** die Funktion, die mit einem verstärkenden Füllstoff wechselwirken kann, des Dienelastomers a) und das an das Elastomer gebundene Siliziumatom über eine Spacergruppe miteinander verbunden sind, die so definiert ist, dass sie ein zweiwertiger, gerader oder verzweigter, gesättigter oder ungesättigter, cyclischer oder nicht cyclischer aliphatischer $C_1$-$C_{18}$-Kohlenwasserstoffrest oder ein zweiwertiger aromatischer $C_6$-$C_{18}$-Kohlenwasserstoffrest ist, wobei die Spacergruppe gegebenenfalls einen oder mehrere aromatische Reste und/oder ein oder mehrere Heteroatome umfasst.

5. Elastomer nach einem der vorhergehenden Ansprüche, **dadurch gekennzeichnet, dass** die Alkoxysilangruppe eine Methoxysilan- oder Ethoxysilangruppe ist, die gegebenenfalls partiell oder vollständig zu Silanol hydrolysiert ist.

6. Modifiziertes Dienelastomer nach einem der Ansprüche 1 bis 5, **dadurch gekennzeichnet, dass** es mindestens 80 Gew.-%, bezogen auf das Gesamtgewicht des modifizierten Dienelastomers, des geraden, größtenteils mittelständig funktionalisierten Dienelastomers a) umfasst.

7. Modifiziertes Dienelastomer nach einem der Ansprüche 1 bis 6, **dadurch gekennzeichnet, dass** es höchstens 20 Gew.-%, bezogen auf das Gesamtgewicht des modifizierten Dienelastomers, des sternförmigen Dienelastomers b) umfasst.

8. Elastomer nach einem der vorhergehenden Ansprüche, **dadurch gekennzeichnet, dass** das sternförmige Dienelastomer ein sternförmiges Elastomer auf der Basis von Zinn oder von Silizium ist.

9. Modifiziertes Dienelastomer nach einem der vorhergehenden Ansprüche, **dadurch gekennzeichnet, dass** das sternförmige Dienelastomer b) ein sternförmiges Dienelastomer mit drei oder vier Verzweigungen ist.

10. Modifiziertes Dienelastomer nach einem der vorhergehenden Ansprüche, **dadurch gekennzeichnet, dass** die Dienelastomere a) und b) vor der Funktionalisierung und Sternbildung die gleiche Mikrostruktur und die gleiche Makrostruktur besitzen.

11. Verstärkte Kautschukzusammensetzung auf der Basis von mindestens einem verstärkenden Füllstoff und einer Elastomermatrix, die mindestens ein modifiziertes Dienelastomer nach einem der Ansprüche 1 bis 10 umfasst.

12. Zusammensetzung nach Anspruch 11, **dadurch gekennzeichnet, dass** der oder die verstärkenden Füllstoffe mehr als 50 Gew.-%, bezogen auf das Gesamtgewicht des verstärkenden Füllstoffs oder der verstärkenden Füllstoffe,

an anorganischem verstärkendem Füllstoff umfassen.

13. Halbfertigprodukt aus Kautschuk für einen Reifen, **dadurch gekennzeichnet, dass** es eine vernetzbare oder vernetzte Kautschukzusammensetzung nach einem der Ansprüche 11 bis 12 umfasst.

14. Halbfertigprodukt nach Anspruch 13, **dadurch gekennzeichnet, dass** das Produkt eine Lauffläche ist.

15. Reifen, **dadurch gekennzeichnet, dass** er ein Halbfertigprodukt nach Anspruch 14 umfasst.

## Claims

1. Modified diene elastomer comprising:

a) at least 70% by weight, with respect to the total weight of the modified diene elastomer, of a linear diene elastomer functionalized predominantly in the middle of the chain by an alkoxysilane group, optionally partially or completely hydrolysed to give silanol, the alkoxysilane group optionally bearing another functional group capable of interacting with a reinforcing filler, the alkoxysilane group being bonded to the two branches of the diene elastomer via the silicon atom, the said functionalized diene elastomer exhibiting a polydispersity index before functionalization of less than or equal to 1.6,
b) more than 0 and up to 30% by weight, with respect to the total weight of the modified diene elastomer, of a star-branched diene elastomer exhibiting a polydispersity index before star-branching of less than or equal to 1.6,

the Mooney viscosity of the said modified diene elastomer varying from 30 to 80.

2. Modified diene elastomer according to Claim 1, **characterized in that** the other functional group capable of interacting with a reinforcing filler of the diene elastomer a) is a functional group chosen from primary, secondary or tertiary and cyclic or non-cyclic amines, isocyanates, imines, cyanos, thiols, carboxylates, epoxides and primary, secondary or tertiary phosphines.

3. Elastomer according to either one of the preceding claims, **characterized in that** the functional group capable of interacting with a reinforcing filler of the diene elastomer a) is a tertiary amine functional group, preferably a diethylamine or dimethylamine functional group.

4. Elastomer according to any one of the preceding claims, **characterized in that** the functional group capable of interacting with a reinforcing filler of the diene elastomer a) and the silicon atom bonded to the elastomer are connected to one another via a spacer group defined as being a saturated or unsaturated, cyclic or non-cyclic, linear or branched, divalent $C_1$-$C_{18}$ aliphatic hydrocarbon radical or a divalent $C_6$-$C_{18}$ aromatic hydrocarbon radical, the said spacer group optionally comprising one or more aromatic radicals and/or one or more heteroatoms.

5. Elastomer according to any one of the preceding claims, **characterized in that** the alkoxysilane group is a methoxysilane or ethoxysilane group, optionally partially or completely hydrolysed to give silanol.

6. Modified diene elastomer according to any one of Claims 1 to 5, **characterized in that** it comprises at least 80% by weight, with respect to the total weight of the modified diene elastomer, of the linear diene elastomer functionalized predominantly in the middle of the chain a).

7. Modified diene elastomer according to any one of Claims 1 to 6, **characterized in that** it comprises at most 20% by weight, with respect to the total weight of the modified diene elastomer, of the star-branched diene elastomer b).

8. Elastomer according to any one of the preceding claims, **characterized in that** the star-branched diene elastomer is a tin-based or silicon-based star-branched elastomer.

9. Modified diene elastomer according to any one of the preceding claims, **characterized in that** the star-branched diene elastomer b) is a star-branched diene elastomer comprising three or four branches.

10. Modified diene elastomer according to any one of the preceding claims, **characterized in that** the diene elastomers a) and b) have, before functionalization and star-branching, the same microstructure and the same macrostructure.

**11.** Reinforced rubber composition based on at least one reinforcing filler and on an elastomer matrix comprising at least one modified diene elastomer as defined in any one of Claims 1 to 10.

**12.** Composition according to Claim 11, **characterized in that** the reinforcing filler(s) comprise(s) more than 50% by weight, with respect to the total weight of the reinforcing filler(s), of reinforcing inorganic filler.

**13.** Semi-finished article made of rubber for a tyre, **characterized in that** it comprises a crosslinkable or crosslinked rubber composition according to any one of Claims 11 to 12.

**14.** Semi-finished article according to Claim 13, **characterized in that** the said article is a tread.

**15.** Tyre, **characterized in that** it comprises a semi-finished article as defined in Claim 14.

FIG.1

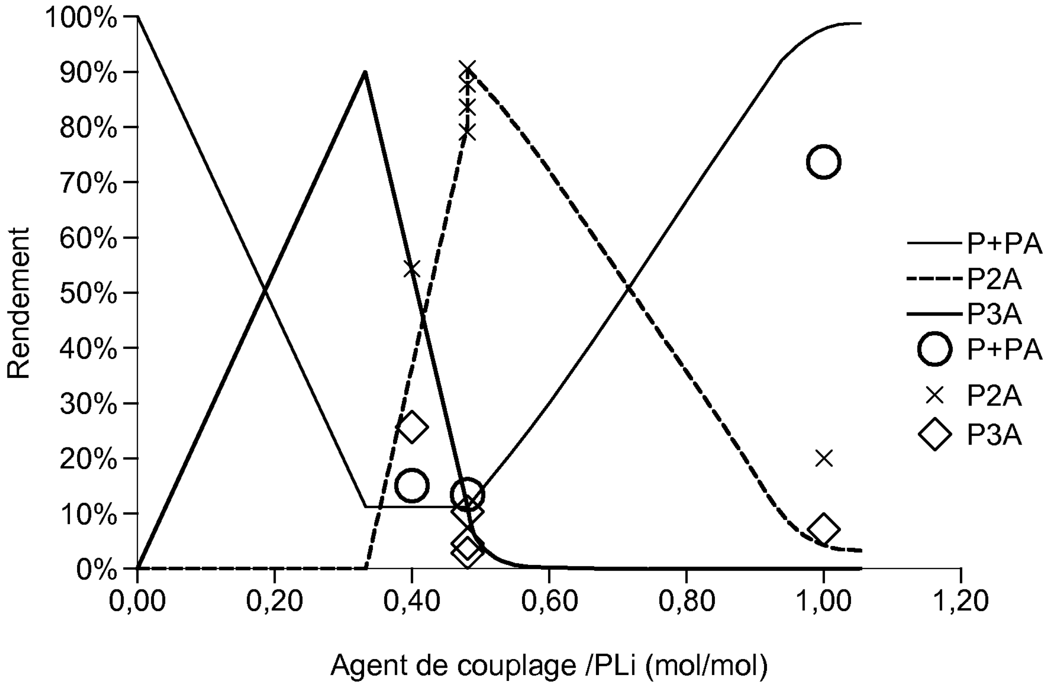
100%
90%
80%
70%
60%
50%
40%
30%
20%
10%
0%
Rendement
0,00
0,20
0,40
0,60
0,80
1,00
1,20
Agent de couplage /PLi (mol/mol)
P+PA
P2A
P3A
P+PA
P2A
P3A

FIG.2

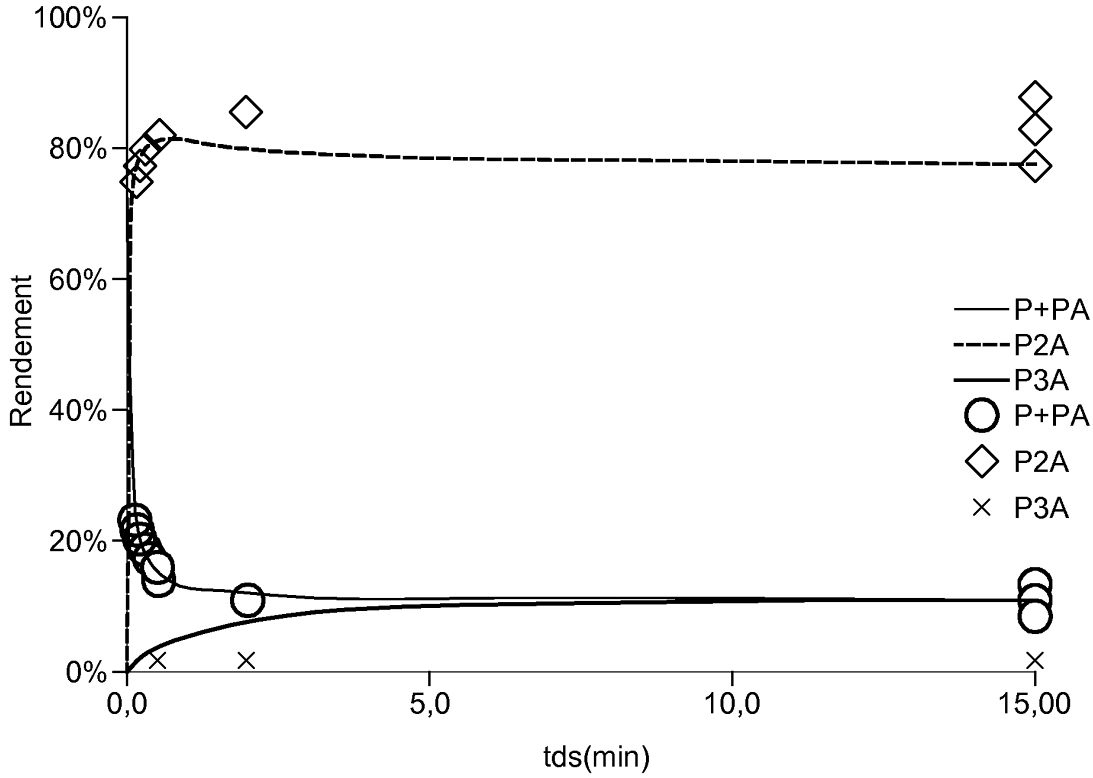
100%
80%
60%
40%
20%
0%
Rendement
0,0
5,0
10,0
15,00
tds(min)
P+PA
P2A
P3A
P+PA
P2A
P3A

FIG.3

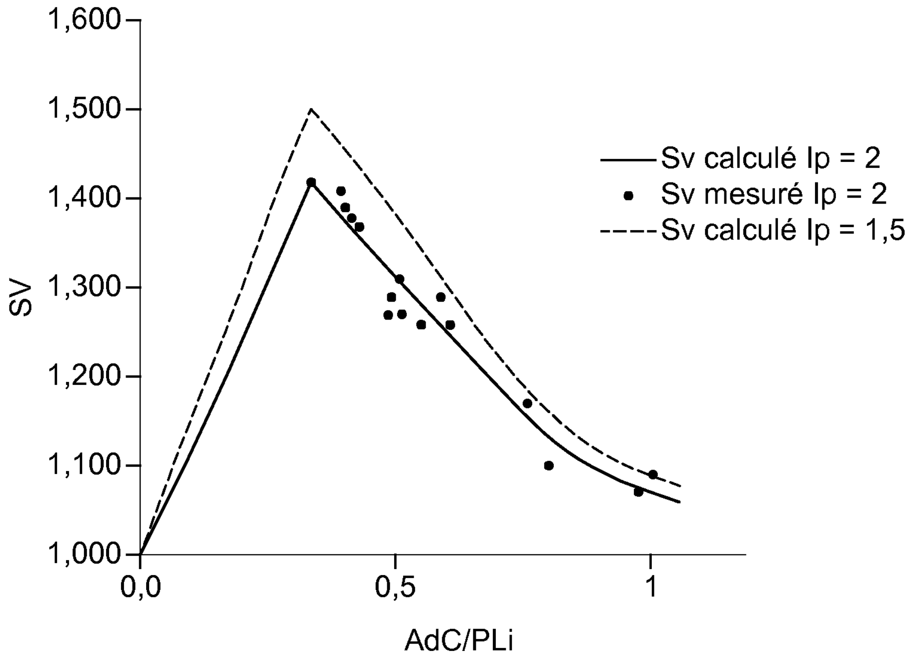
1,600
1,500
1,400
1,300
1,200
1,100
1,000
SV
0,0
0,5
1
AdC/PLi
Sv calculé Ip = 2
Sv mesuré Ip = 2
Sv calculé Ip = 1,5

FIG.4

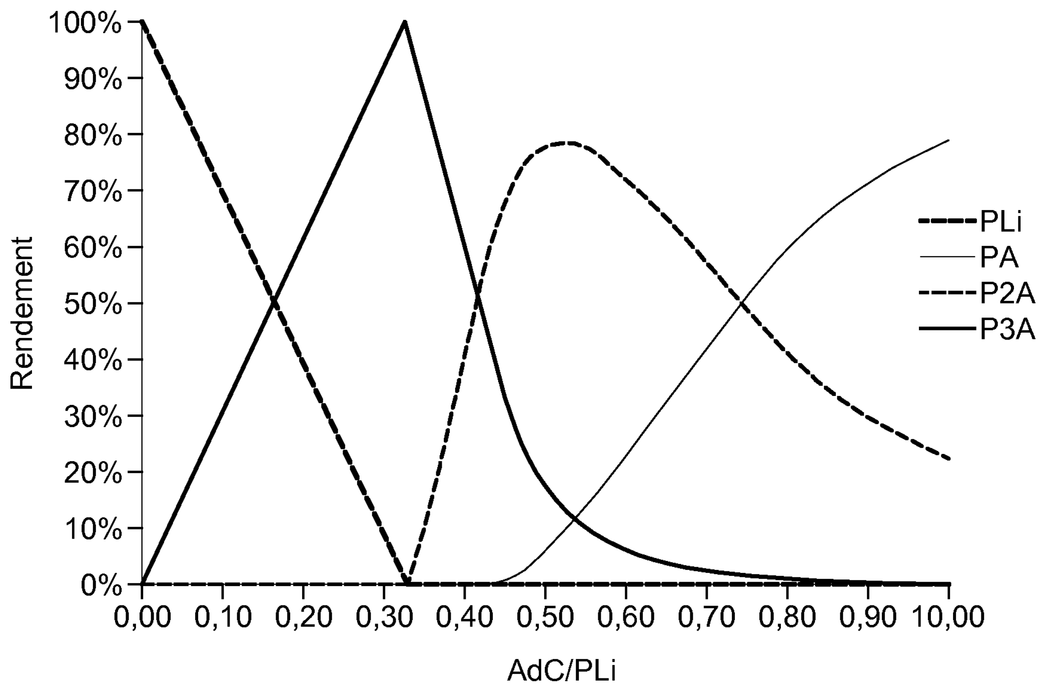
100%
90%
80%
70%
60%
50%
40%
30%
20%
10%
0%
Rendement
0,00
0,10
0,20
0,30
0,40
0,50
0,60
0,70
0,80
0,90
10,00
AdC/PLi
PLi
PA
P2A
P3A

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5066721 A
- EP 0299074 A
- EP 0992537 A
- US 20050203251 A
- WO 2009133068 A1
- WO 2009077837 A
- WO 2011042507 A
- WO 2015018599 A1
- EP 2266819 A1
- US 6610261 B
- US 6747087 B
- WO 9637547 A
- WO 9928380 A
- WO 2006069792 A
- WO 2006069793 A
- WO 2008003434 A
- WO 2008003435 A
- WO 0210269 A


### Littérature non-brevet citée dans la description


- **T. W. GREEN ; P. G. M. WUTS.** Protective Groups in Organic Synthesis. 1999
- **VILMIN, F. ; DUSSAP, C. ; COSTE, N.** *Applied Spectroscopy,* 2006, vol. 60, 619-29
- **VILLERMEAUX, J.** *Génie de la réaction chimique,* 1993